# EUROPEAN PATENT APPLICATION

(11) **EP 4 597 189 A1**
(43) Date of publication of application: **06.08.2025**
(21) Application number: 23872707.7
(22) Date of filing: 26.06.2023
(51) Int. Cl.: G02B 7/09, G02B 7/02, G02B 27/64, H02K 33/18, G03B 3/10, G03B 30/00, H04N 23/55

(54) **LENS DRIVING DEVICE, CAMERA DEVICE, AND OPTICAL DEVICE**

(30) Priority: 27.09.2022 KR 20220122772
(71) Applicant: LG INNOTEK CO. LTD, Gangseo-gu Seoul 07796 (KR)
(72) Inventor: NOH, Yun Ho, Seoul 07796 (KR); LEE, Sung Guk, Seoul 07796 (KR)
(74) Representative: DREISS Patentanwälte PartG mbB
(86) International application number: PCT/KR2023/008873
(87) International publication number: WO 2024/071580

(57) **Abstract**

The present embodiment relates to a lens driving device comprising: a base; a housing arranged on the base; a guide frame arranged in the housing; a bobbin arranged in the guide frame; a first ball arranged between the base and the housing; a second ball arranged between one side surface of the guide frame and the side surface of the housing; and a third ball arranged between the side surface of the bobbin and the other side surface of the guide frame.

## Description

### [Technical Field]

The present embodiment relates to a lens driving device, a camera device, and an optical device.

### [Background Art]

A camera device is a device that photographs a picture or video of a subject, and is installed in optical instruments such as smartphones, drones, and vehicles.

An auto-focus function that automatically adjusts the focus according to the distance of the subject is applied to the camera device. In addition, a handshake correction function is applied to prevent a phenomenon in which the focus is shaken by the user's handshake.

Autofocus and handshake correction functions can be performed through the electromagnetic interaction between the magnet and the coil.

However, in conventional lens driving devices, in the disposement of magnets and coils for performing the autofocus function, magnets that do not require electrical connection are disposed in the moving part, and the coils are disposed in the fixed part. In this case, there is a problem that the magnets, which are heavier than the coils, are disposed in the moving part, and the current consumption for performing the autofocus function increases.

In particular, recently, as image sensors become highly pixelated, the lens diameter has increased, and the weight of the lens has also increased, which has exacerbated the problem.

In addition, in order to dispose the magnets and coils, and the like for performing the auto focus function and handshake correction function, a size larger than the thickness of the smartphone in an optical axis direction is required, which causes the camera device mounted on the smartphone to be protruded more than other portions of the smartphone.

(Patent Literature 1) KR 10-2015-0118005 A

### [Detailed Description of the Invention]

### [Technical Subject]

The present embodiment is intended to provide a lens driving device in which power consumption for performing an autofocus function is reduced by disposing a coil that is lightweight compared to a magnet in a moving unit.

In addition, the present embodiment is intended to provide a camera device having an autofocus function and a handshake correction function, but with a minimized size in an optical axis direction.

### [Technical Solution]

A lens driving device according to the present embodiment may comprise: a base; a housing being disposed on the base; a guide frame being disposed inside the housing; a bobbin being disposed in the guide frame; a first ball being disposed between the base and the housing; a second ball being disposed between one side surface of the guide frame and the side surface of the housing; and a third ball being disposed between the side surface of the bobbin and the other side surface of the guide frame.

A lens driving device according to the present embodiment may comprise: a fixed unit; a first moving unit being disposed on the fixed unit; a second moving unit being disposed inside the first moving unit and comprising a bobbin and a guide frame; a first drive unit moving the first moving unit in an optical axis direction; a second drive unit moving the second moving unit in a direction perpendicular to the optical axis direction; a first support member being disposed between the first moving unit and the fixed unit; a second support member being disposed between side surfaces of the first moving unit and the second moving unit; and a third support member being disposed between a side surface of the bobbin and a side surface of the guide frame.

The lens driving device may comprise a first driving unit that moves the guide frame in a first direction perpendicular to the optical axis direction; and a second driving unit that moves the bobbin in a second direction perpendicular to the optical axis direction and the first direction.

A lens driving device according to the present embodiment may comprise: a fixed unit; a first moving unit being disposed on the fixed unit; a second moving unit being disposed inside the first moving unit and comprising a bobbin and a guide frame; a first drive unit moving the first moving unit in an optical axis direction; a second drive unit being disposed in the first moving unit and the second moving unit and moving the second moving unit in an x-axis; and a third drive unit moving the bobbin in a y-axis.

The first moving unit may bring the bobbin in close contact with the guide frame.

The first moving unit may comprise a yoke that brings the bobbin in close contact with the guide frame.

The first moving unit may comprise a first yoke that brings the first moving unit in close contact with the fixed unit and a second yoke that brings the guide frame in close contact with the first moving unit.

The first moving unit may comprise a third yoke that brings the bobbin in close contact with the guide frame.

The first moving unit may comprise a housing, and the first to third yokes may be coupled to the housing.

The third drive unit may comprise a first magnet being disposed in the bobbin and a first coil interacting with the first magnet, and the first coil may move together with the first moving unit.

The second drive unit may comprise a second magnet being disposed in the guide frame and a second coil interacting with the second magnet, and the second coil may move together with the first moving unit.

The first drive unit may comprise a third magnet being disposed in the fixed unit and a third coil interacting with the third magnet, and the third coil may move together with the first moving unit.

The lens driving device may comprise a fourth magnet being disposed in the bobbin and a yoke being disposed in the second moving unit so as to exert an attractive force on the fourth magnet.

When the second moving unit moves along the x-axis by the second drive unit, the distance between the fourth magnet and the yoke along the x-axis is maintained, and the distance between the first magnet and the first coil along the x-axis can be changed.

The fourth magnet may be spaced apart from the first magnet, and the fourth magnet may not face the first coil.

Each of the first magnet, the second magnet, and the fourth magnet may comprise a first magnet portion comprising an N pole and a S pole, a second magnet portion comprising a S pole and a N pole, and a neutral portion being disposed between the first magnet portion and the second magnet portion.

When viewed from above, the third magnet, the third coil, the first magnet, and the first coil can be disposed in sequence on a first imaginary straight line parallel to the x-axis.

When viewed from above, the third magnet, the third coil, the fourth magnet, and the yoke can be disposed in sequence on a second imaginary straight line parallel to the x-axis.

A camera device according to the present embodiment may comprise: a printed circuit board; an image sensor being disposed in the printed circuit board; a lens driving device being disposed in the printed circuit board; and a lens being coupled to the lens driving device.

An optical device according to the present embodiment may comprise: a main body; a camera device being disposed in the main body; and a display being disposed in the main body and outputting at least one of an image and a video photographed by the camera device.

### [Advantageous Effects]

Through the present embodiment, as the coil having a lighter weight than the magnet is disposed in the moving unit, current consumption for performing the auto-focus function may be reduced.

In addition, it is possible to perform an auto-focus function and a handshake correction function in a camera device of a size being minimized in an optical axis direction.

That is, according to the present embodiment, even though it is a camera device not being protruded from a smartphone, both an auto-focus function and a handshake correction function can be performed.

### [Brief Description of Drawings]

FIG. 1 is a conceptual diagram of a lens driving device according to the present embodiment.
FIG. 2 is a perspective view of a lens driving device according to the present embodiment.
FIG. 3 is a cross-sectional view taken along line A-A of FIG. 2.
FIG. 4 is a cross-sectional view taken along line B-B of FIG. 2.
FIG. 5 is a cross-sectional view taken along line C-C of FIG. 2.
FIG. 6 is a cross-sectional view of a lens driving device according to the present embodiment cut in a direction perpendicular to an optical axis and viewed from above.
FIG. 7 is an exploded perspective view of a lens driving device according to the present embodiment.
FIG. 8 is an exploded perspective view of a lens driving device according to the present embodiment viewed from a different direction than FIG. 7.
FIG. 9 is a perspective view of a lens driving device according to the present embodiment with a cover omitted.
FIG. 10 is a perspective view illustrating a fixed unit and related configuration of a lens driving device according to the present embodiment.
FIG. 11 is a perspective view illustrating a moving unit and related configuration of a lens driving device according to the present embodiment.
FIG. 12 is a perspective view illustrating a moving unit and related configuration of a lens driving device viewed from a different direction from FIG. 11.
FIG. 13 is a bottom perspective view illustrating a moving unit and related configuration of a lens driving device viewed from a different direction from FIG. 11 and FIG. 12.
FIG. 14 is a perspective view illustrating an AF moving unit and related configuration of a lens driving device according to the present embodiment.
FIG. 15 is a perspective view illustrating an AF moving unit and related configuration of a lens driving device viewed from a different direction from FIG. 14.
FIG. 16 is a perspective view illustrating an OIS moving unit and related configuration of a lens driving device according to the present embodiment.
FIG. 17 is a perspective view illustrating an OIS moving unit and related configuration of a lens driving device viewed from a different direction from FIG. 16.
FIG. 18 is a perspective view illustrating an OIS-x moving unit and related configuration of a lens driving device according to the present embodiment.
FIG. 19 is a perspective view illustrating an OIS-x moving unit and related configuration of a lens driving device viewed from a different direction than FIG. 18.
FIG. 20 is a perspective view illustrating an OIS-y moving unit and related configuration of a lens driving device according to the present embodiment.
FIG. 21 is a bottom view illustrating a drive unit and related configuration of a lens driving device according to the present embodiment.
FIG. 22 is a cross-sectional view illustrating an AF guide ball and related configuration of a lens driving device according to the present embodiment.
FIG. 23 is a side view illustrating an AF guide ball and related configuration with the base omitted.
FIG. 24 is a cross-sectional view illustrating an AF guide ball and related configuration with the AF carrier omitted.
FIG. 25 is a perspective view illustrating an AF guide ball and related configuration with the AF carrier omitted.
FIG. 26 is a perspective view illustrating an AF guide ball and related configuration with the AF carrier omitted, viewed from a different direction than FIG. 25.

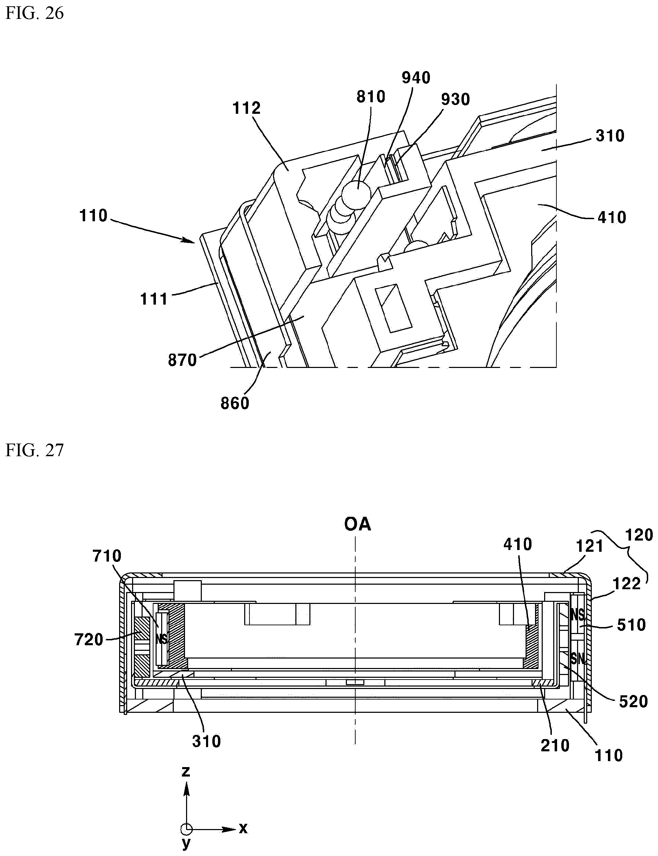

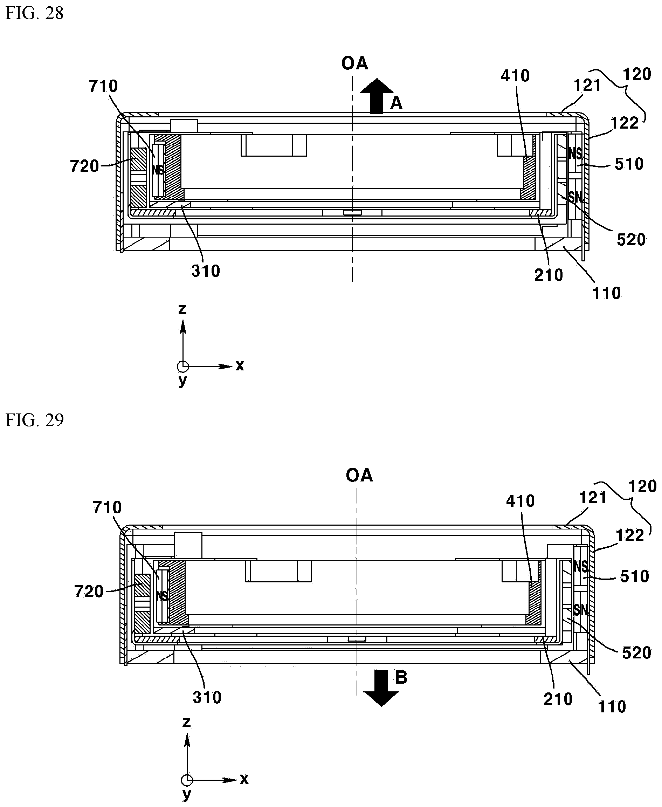

FIGS. 27 to 29 are diagrams for explaining the auto focus driving of a lens driving device according to the present embodiment. FIG. 27 is a cross-sectional view illustrating the appearance of a moving unit in an initial state where no current is applied to the AF coil. FIG. 28 is a cross-sectional view illustrating the appearance where a moving unit moves upward in an optical axis direction when a forward current is applied to an AF coil. FIG. 29 is a cross-sectional view illustrating the appearance where a moving unit moves downward in an optical axis direction when a reverse current is applied to an AF coil.

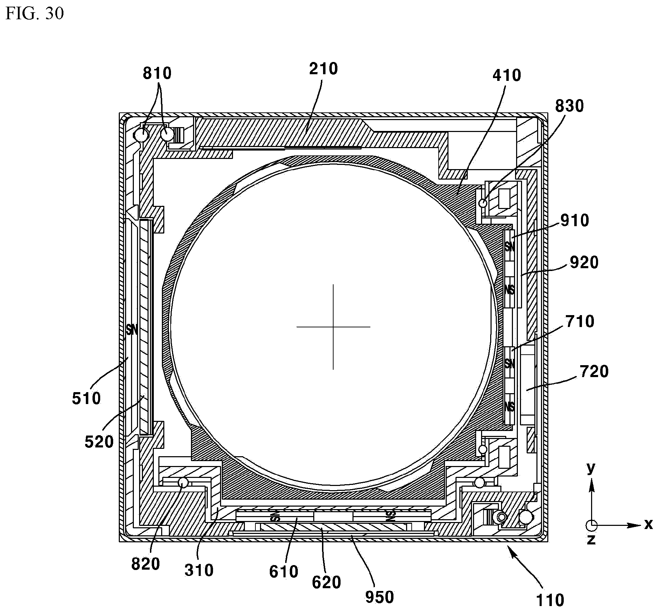

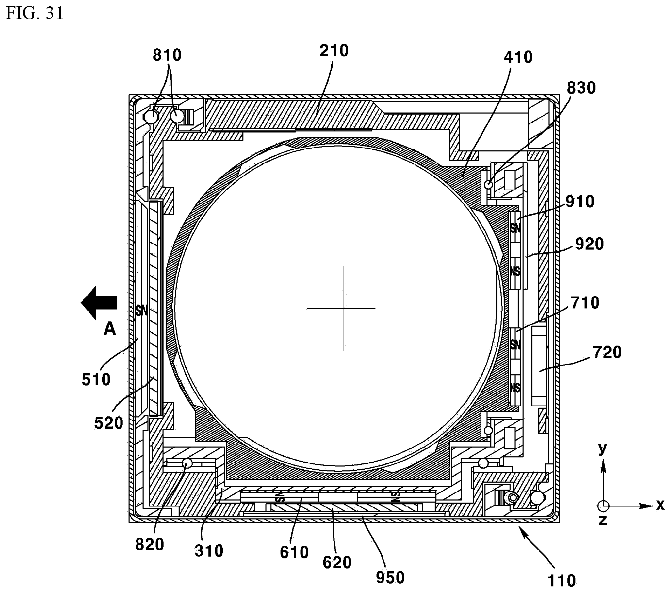

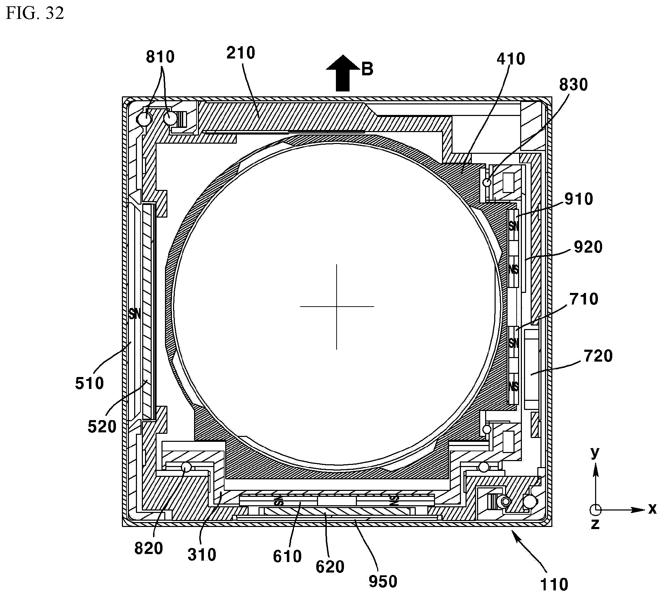

FIGS. 30 to 32 are diagrams for explaining the handshake correction driving of a lens driving device according to the present embodiment. FIG. 30 is a cross-sectional view illustrating the appearance of an OIS moving unit in an initial state in which no current is applied to an OIS-x coil and an OIS-y coil. FIG. 31 is a cross-sectional view illustrating the appearance in which an OIS moving unit moves in an x-axis direction perpendicular to the optical axis when current is applied to the OIS-x coil. FIG. 32 is a cross-sectional view illustrating the appearance in which the OIS-y moving unit moves in a y-axis direction perpendicular to both the optical axis and the x-axis when current is applied to an OIS-y coil.

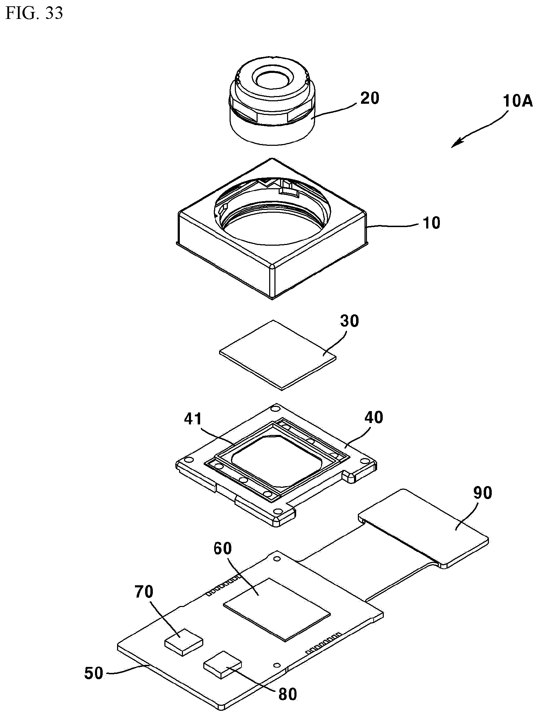

FIG. 33 is an exploded perspective view of a camera device according to the present embodiment.
FIG. 34 is a perspective view of an optical device according to the present embodiment.
FIG. 35 is a perspective view of an optical device according to a modified embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or disposed in "on (above)" or "below (under)" of each component, "on (above)" or "below (under)" means that it comprises not only the case where the two components are directly in contact with, but also the case where one or more other components are formed or disposed between the two components. In addition, when expressed as "on (above)" or "below (under)", the meaning of not only an upward direction but also a downward direction with respect to one component may be comprised.

The 'optical axis (see **OA** of FIG. 29) direction' used hereinafter is defined as an optical axis direction of a lens and/or image sensor being coupled to a lens driving device.

The 'vertical direction' used hereinafter may be a direction parallel to or the same as an optical axis direction. The vertical direction may correspond to a 'z-axis direction'. The 'horizontal direction' used hereinafter may be a direction perpendicular to a vertical direction. That is, a horizontal direction may be a direction perpendicular to the optical axis. Therefore, a horizontal direction may comprise an 'x-axis direction' and a 'y-axis direction'.

The 'auto focus (AF) function' used hereinafter is defined as a function that automatically focuses on a subject by adjusting the distance from an image sensor by moving the lens in an optical axis direction according to the distance of the subject so that a clear image of the subject can be obtained on an image sensor. In addition, 'closed-loop auto focus (CLAF) control' is defined as detecting the distance between an image sensor and a lens and controlling the position of the lens through feedback in real time in order to improve the accuracy of focus adjustment.

The 'optical image stabilization (OIS) function' used hereinafter is defined as a function that moves or tilts a lens in a direction perpendicular to the optical axis to offset handshake in order to prevent an image or video from shaking due to the user's handshake. In addition, 'closed-loop auto focus (CLAF) control' is defined as detecting the position of a lens with respect to an image sensor and controlling the feedback of the lens position in real time in order to improve the accuracy of handshake correction.

Hereinafter, any one among an " AF moving unit **200**", an "OIS-x moving unit **300",** and an "OIS-y moving unit **400**" may be referred to as a "first moving unit", the other may be referred to as a "second moving unit", and yet the other may be referred to as a "third moving unit".

Hereinafter, any one among an "AF drive unit **500**", an "OIS-x drive unit **600**", and an "OIS-y drive unit **700"** may be referred to as a "first drive unit", the other may be referred to as a "second drive unit", and yet the other may be referred to as a "third drive unit".

Hereinafter, any one among an "AF magnet **510",** an "OIS-x magnet **610",** an "OIS-y magnet **710"** and a "magnet 910" may be referred to as a "first magnet", the other may be referred to as a "second magnet", and yet the other may be referred to as a "fourth magnet".

Hereinafter, any one among an "AF coil **520",** an "OIS-x coil **620",** and an "OIS-y coil **720"** may be referred to as a "first coil", the other may be referred to as a "second coil", and yet the other may be referred to as a "third coil".

Hereinafter, one of an "outer substrate **860"** and an "inner substrate **870"** may be referred to as a "first substrate" and the other may be referred to as a "second substrate".

Hereinafter, one among an "AF guide ball **810",** an "OIS-x guide ball **820",** and an "OIS-y guide ball **830"** may be referred to as a "first ball", the other may be referred to as a "second ball", and yet the other may be referred to as a "third ball".

Hereinafter, one among an "AF sensor **530",** an "OIS-x sensor **630",** and an "OIS-y sensor **730"** may be referred to as a "first sensor", the other may be referred to as a "second sensor", and yet the other may be referred to as a "third sensor".

Hereinafter, any one among an "AF yoke **540",** an "OIS-x yoke **640",** an "OIS-y yoke **740",** a "yoke **915",** a "yoke **920",** and a "yoke **950"** is referred to as a "first yoke", the other is referred to as a "second yoke", yet the other is referred to as a "third yoke", still the other is referred to as a "fourth yoke", yet still the other is referred to as a "fifth yoke", and still yet the other may be referred to as a "sixth yoke".

Hereinafter, an "AF carrier **210"** may be referred to as a "housing."

Hereinafter, an "OIS-x carrier **310"** may be referred to as a "guide frame".

Hereinafter, an "OIS-y carrier **410"** may be referred to as a "bobbin".

Hereinafter, the configuration of a lens driving device according to the present embodiment is described with reference to the drawings.

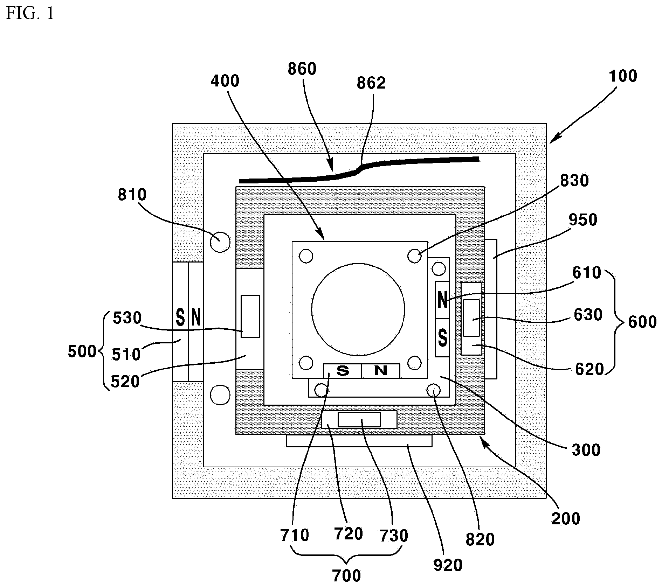

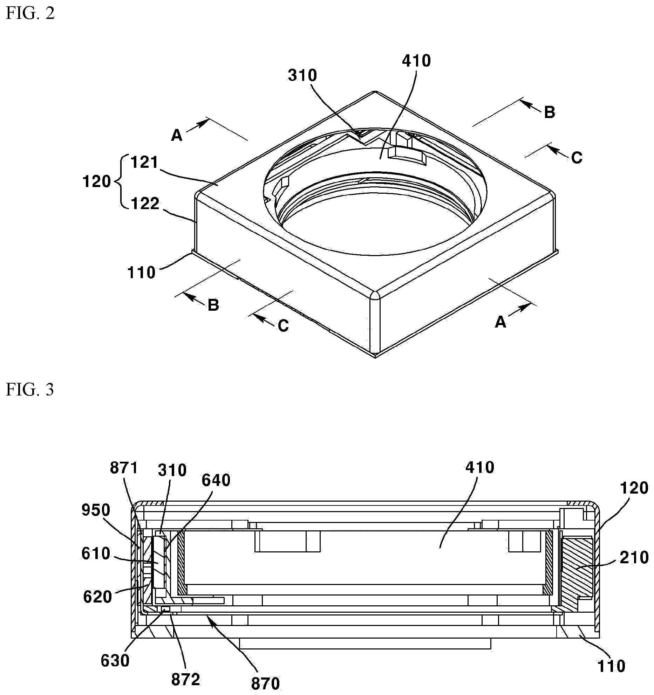

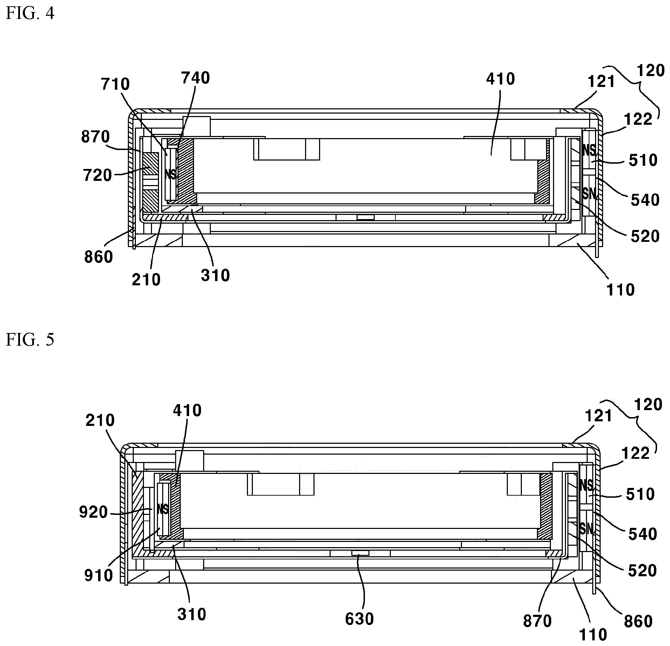

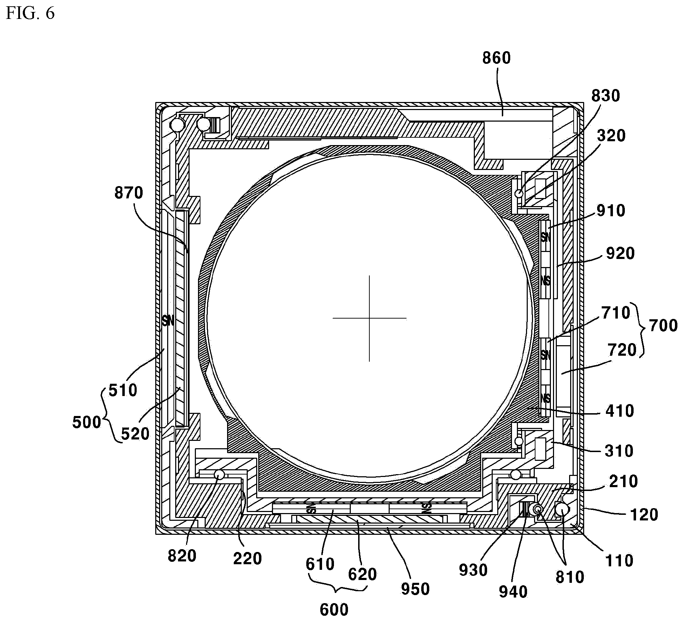

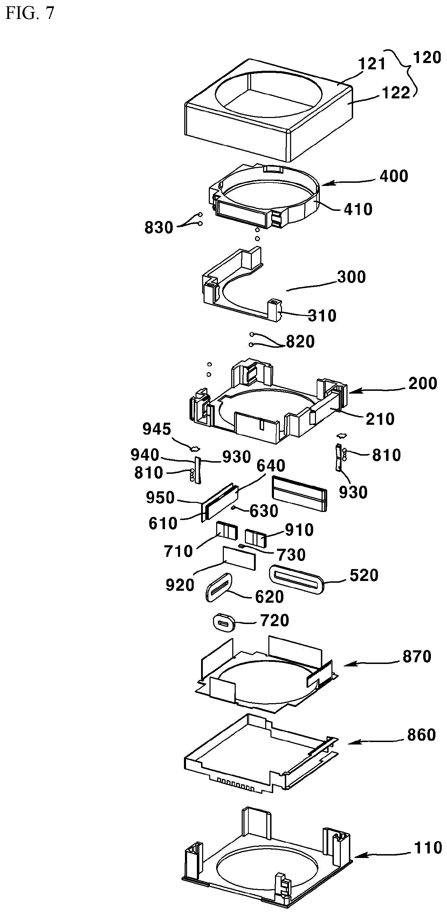

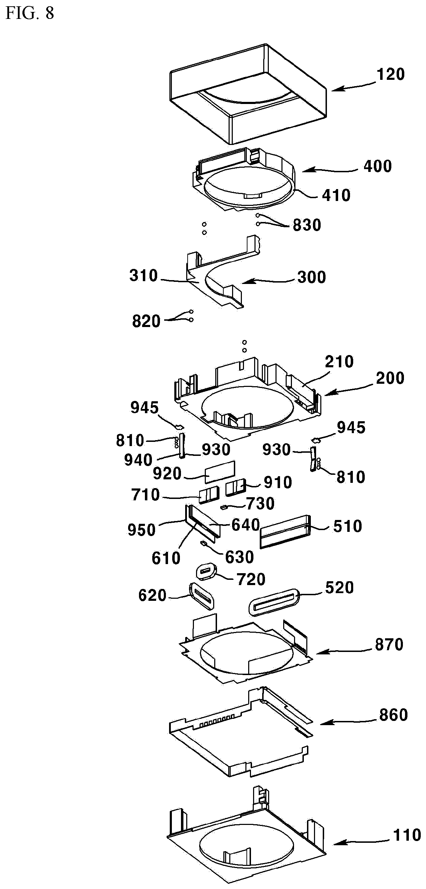

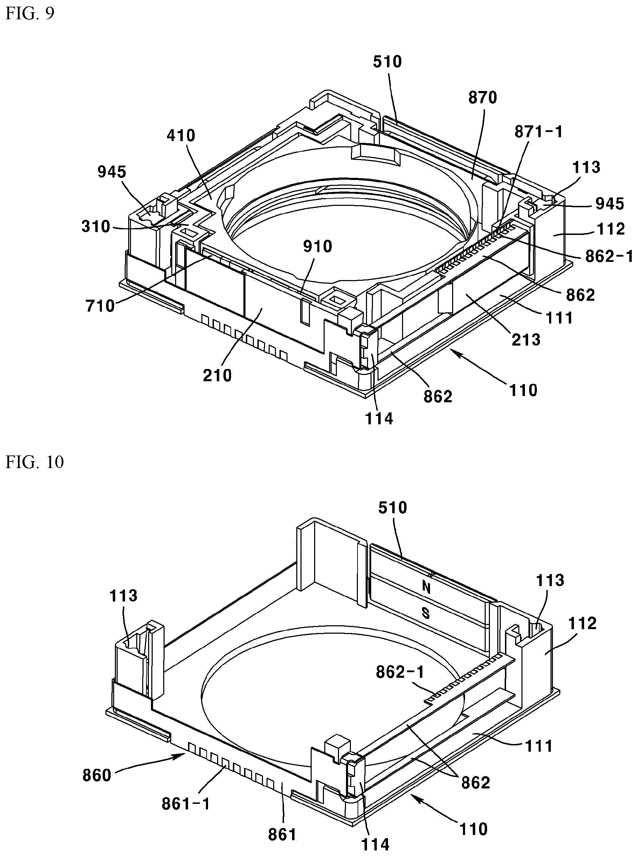

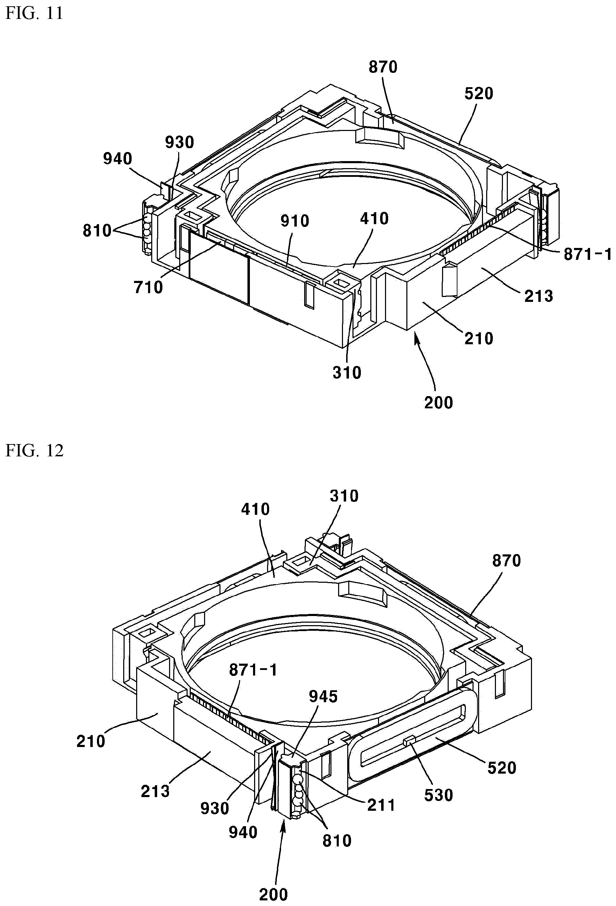

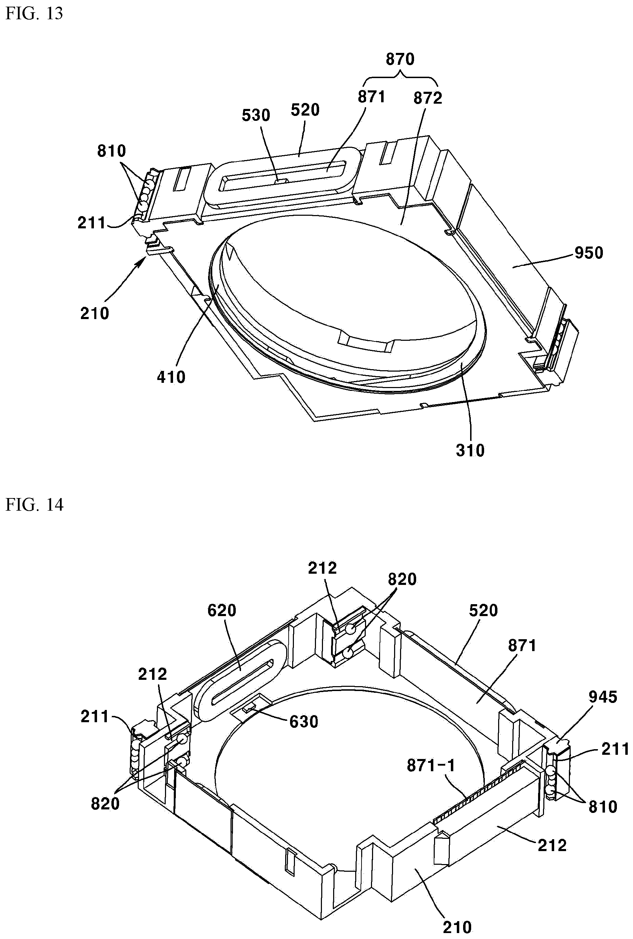

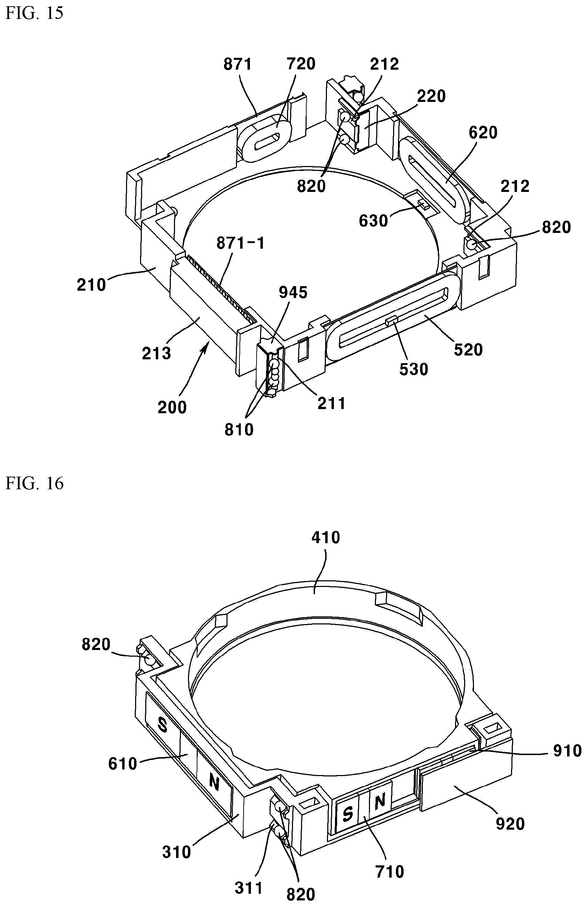

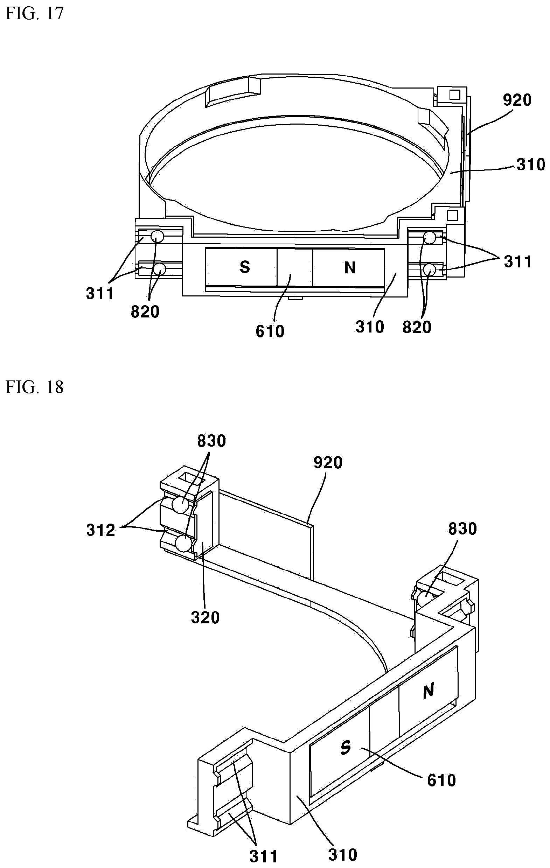

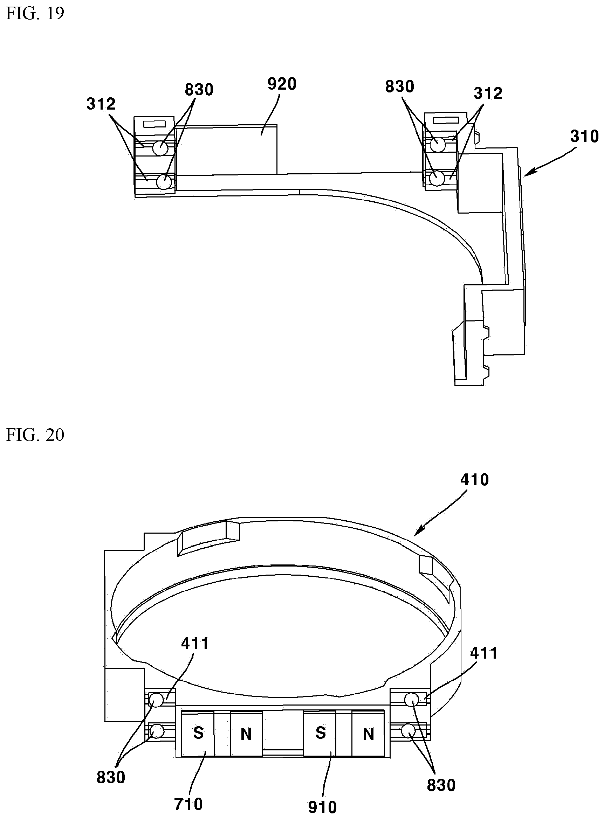

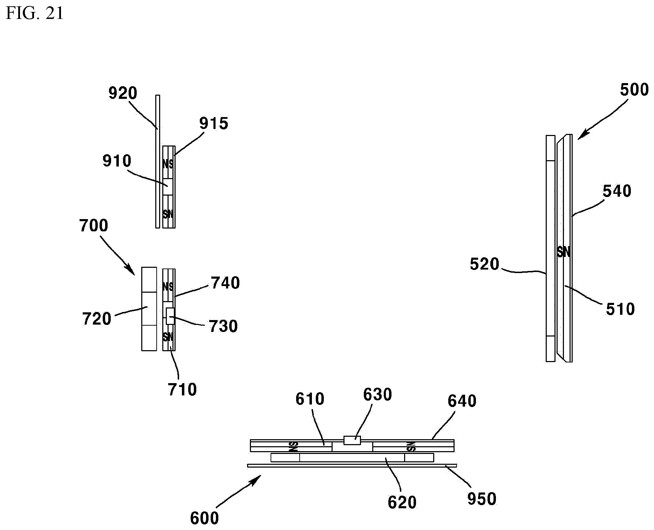

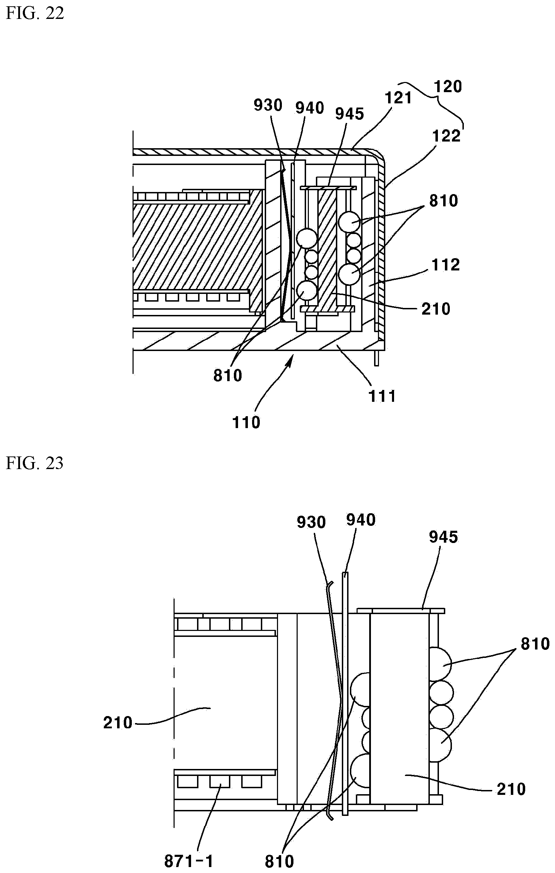

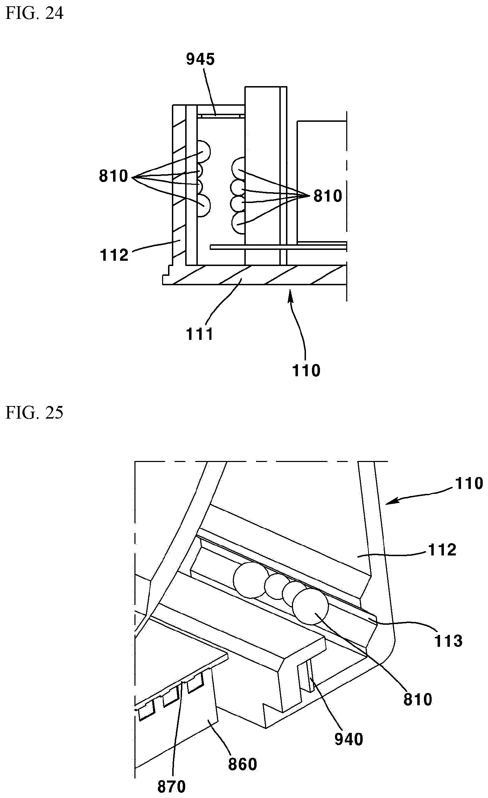

FIG. 1 is a conceptual diagram of a lens driving device according to the present embodiment; FIG. 2 is a perspective view of a lens driving device according to the present embodiment; FIG. 3 is a cross-sectional view taken along line A-A of FIG. 2; FIG. 4 is a cross-sectional view taken along line B-B of FIG. 2; FIG. 5 is a cross-sectional view taken along line C-C of FIG. 2; FIG. 6 is a cross-sectional view of a lens driving device according to the present embodiment cut in a direction perpendicular to an optical axis and viewed from above; FIG. 7 is an exploded perspective view of a lens driving device according to the present embodiment; FIG. 8 is an exploded perspective view of a lens driving device according to the present embodiment viewed from a different direction than FIG. 7; FIG. 9 is a perspective view of a lens driving device according to the present embodiment with a cover omitted; FIG. 10 is a perspective view illustrating a fixed unit and related configuration of a lens driving device according to the present embodiment; FIG. 11 is a perspective view illustrating a moving unit and related configuration of a lens driving device according to the present embodiment; FIG. 12 is a perspective view illustrating a moving unit and related configuration of a lens driving device viewed from a different direction from FIG. 11; FIG. 13 is a bottom perspective view illustrating a moving unit and related configuration of a lens driving device viewed from a different direction from FIG. 11 and FIG. 12; FIG. 14 is a perspective view illustrating an AF moving unit and related configuration of a lens driving device according to the present embodiment; FIG. 15 is a perspective view illustrating an AF moving unit and related configuration of a lens driving device viewed from a different direction from FIG. 14; FIG. 16 is a perspective view illustrating an OIS moving unit and related configuration of a lens driving device according to the present embodiment; FIG. 17 is a perspective view illustrating an OIS moving unit and related configuration of a lens driving device viewed from a different direction from FIG. 16; FIG. 18 is a perspective view illustrating an OIS-x moving unit and related configuration of a lens driving device according to the present embodiment; FIG. 19 is a perspective view illustrating an OIS-x moving unit and related configuration of a lens driving device viewed from a different direction than FIG. 18; FIG. 20 is a perspective view illustrating an OIS-y moving unit and related configuration of a lens driving device according to the present embodiment; FIG. 21 is a bottom view illustrating a drive unit and related configuration of a lens driving device according to the present embodiment; FIG. 22 is a cross-sectional view illustrating an AF guide ball and related configuration of a lens driving device according to the present embodiment; FIG. 23 is a side view illustrating an AF guide ball and related configuration with the base omitted; FIG. 24 is a cross-sectional view illustrating an AF guide ball and related configuration with the AF carrier omitted; FIG. 25 is a perspective view illustrating an AF guide ball and related configuration with the AF carrier omitted; and FIG. 26 is a perspective view illustrating an AF guide ball and related configuration with the AF carrier omitted, viewed from a different direction than FIG. 25.

The lens driving device **10** may be a voice coil motor (VCM). The lens driving device 10 may be a lens driving motor. The lens driving device **10** may be a lens driving actuator. The lens driving device **10** may comprise an AF module. The lens driving device **10** may comprise an OIS module.

The lens driving device **10** may comprise a fixed unit **100.** The fixed unit **100** may be a portion that is relatively fixed when the moving unit moves. The moving unit may move with respect to the fixed unit **100.**

The lens driving device **10** may comprise a base **110.** The fixed unit **100** may comprise a base **110.** The base **110** may be disposed under the AF carrier **210.** The base **110** may be disposed under the OIS-x carrier **310.** The base **110** may be disposed under the OIS-y carrier **410.** The base **110** may be coupled with the cover **120.** The AF carrier **210,** the OIS-x carrier **310,** and the OIS-y carrier **410** may be disposed on the base **110.** The AF carrier **210,** the OIS-x carrier **310,** and the OIS-y carrier **410** may be disposed on the lower plate portion **111** of the base **110.** The AF carrier **210,** the OIS-x carrier **310,** and the OIS-y carrier **410** may be disposed inside the base **110.** The AF carrier **210,** the OIS-x carrier **310,** and the OIS-y carrier **410** may be disposed inside the side wall portion **112** of the base **110.**

The base **110** may comprise a lower plate portion **111.** The base **110** may comprise a side wall portion **112.** The side wall portion **112** may be a 'side portion'. The side wall portion **112** may be a 'side plate'. The side wall portion **112** may be a 'side wall'. The side wall portion **112** of the base **110** may be extended from an upper surface of the lower plate portion 111.

The side wall portion **112** of the base **110** may comprise a plurality of side walls. The side wall portion **112** of the base **110** may comprise four side walls. The side wall portion **112** of the base **110** may comprise first to fourth side walls. The side wall portion **112** of the base **110** may comprise a first side wall and a second side wall being disposed opposite to each other, and a third side wall and a fourth side wall being disposed opposite to each other. At this time, the AF magnet **510** may be disposed on a first side plate of the base **110.** The OIS-x magnet **610** may be disposed on a position corresponding to the third side plate of the base **110.** The OIS-y magnet **710** may be disposed on a position corresponding to the second side plate of the base **110.**

The base **110** may comprise a groove **113.** The groove **113** may be an 'AF guide ball accommodating groove'. An AF guide ball **810** may be disposed in the groove **113.** The groove **113** may be in direct contact with the AF guide ball **810.** The groove **113** may be disposed in an optical axis direction. The groove **113** may comprise a plurality of grooves. The groove **113** may comprise two grooves. The two grooves may be disposed parallel to each other. The groove **113** may comprise a first groove being in contact with the AF guide ball **810** at two points, and a second groove being in contact with the AF guide ball **810** at one point. In a modified embodiment, both the first groove and the second groove may come into contact with the AF guide ball **810** at two points.

The base **110** may comprise a protruded portion **114.** The protruded portion **114** may be protruded outwardly. A connection portion **712** of an outer substrate **710** may be disposed above and below the protruded portion **114.** A groove may be formed in the protruded portion **114** so as not to interfere even when the connection portion **712** of the outer substrate **710** moves.

The base **110** may comprise a step. The step may be formed at a lower end of an outer side surface of the base **110.** The step may be protruded from an outer side surface of the base **110.** A side plate **122** of the cover **120** may be disposed in the step of the base **110.**

The lens driving device **10** may comprise a cover **120.** The fixed unit **100** may comprise a cover **120.** The cover **120** may be disposed in the base **110.** The cover **120** may be disposed on the base **110.** The cover **120** may be coupled to the base **110.** The cover **120** may be fixed to the base **110.** The cover **120** may accommodate an AF carrier **210** therein. The cover **120** may accommodate an OIS-x carrier **310** and an OIS-y carrier **410** therein. The cover **120** may be a shield member. The cover **120** may be a shield can.

The cover **120** may comprise an upper plate **121.** The upper plate **121** may be disposed on the moving unit. The upward movement of the moving unit may be limited by the moving unit being in contact with the upper plate **121.** The upper plate **121** may comprise a hole through which light passes.

The cover **120** may comprise a side plate **122.** The side plate **122** may be extended from the upper plate **121.** The side plate **122** may be disposed in the base **110.** The side plate **122** may be disposed on a step portion being protruded from a lower end portion of an outer side surface of the base **110.** The side plate **122** may comprise a plurality of side plates. The side plate **122** may comprise four side plates. The side plate **122** may comprise a first side plate and a second side plate being disposed opposite each other and a third side plate and a fourth side plate being disposed opposite each other.

The lens driving device **10** may comprise a moving unit. The moving unit may be disposed in the fixed unit **100.** The moving unit may be disposed in the fixed unit **100.** The moving unit may be disposed inside the fixed unit **100.** The moving unit may be movably disposed on the fixed unit **100.** The moving unit may be moved with respect to the fixed unit **100** by the drive unit. The moving unit may be moved during AF driving. The moving unit may be moved during OIS driving. A lens may be coupled to the moving unit.

The lens driving device **10** may comprise an AF moving unit **200.** The moving unit may comprise an AF moving unit **200.** The AF moving unit **200** may be disposed in the fixed unit **100.** The AF moving unit **200** may be disposed inside the fixed unit **100.** The AF moving unit **200** may be disposed on the fixed unit **100.** The AF moving unit **200** may be disposed between the fixed unit **100** and the OIS moving unit. The AF moving unit **200** may be movably disposed in the fixed unit **100.** The AF moving unit **200** may be moved in an optical axis direction against the fixed unit **100** by the AF drive unit **500.** The AF moving unit **200** may be moved during AF driving.

The lens driving device **10** may comprise an AF carrier **210.** The AF moving unit **200** may comprise an AF carrier **210.** The AF carrier **210** may be an 'AF holder'. The AF carrier **210** may be a 'housing'. The AF carrier **210** may be disposed inside the base **110.** The AF carrier **210** may be disposed on the base **110.** The AF carrier **210** may be disposed inside the cover **120.** The AF carrier **210** may be disposed between the base **110** and the OIS-x carrier **310.** The AF carrier **210** may be disposed between the base **110** and the OIS-y carrier **410.** The AF carrier **210** may be movably disposed in an optical axis direction.

The AF carrier **210** may comprise a groove **211.** The holder member **220** may comprise a groove **211.** The groove **211** may be an 'AF guide ball accommodating groove'. An AF guide ball **810** may be groove in the groove **211.** The groove **211** may be in direct contact with the AF guide ball **810.** The groove **211** may be groove in an optical axis direction. The groove **211** may guide the AF guide ball **810** to move in an optical axis direction. The groove **211** may comprise a plurality of grooves. The groove **211** may comprise two grooves. The two grooves may be groove parallel to each other. The groove **211** may comprise a first groove being in contact with the AF guide ball **810** at two points, and a second groove being in contact with the AF guide ball **810** at one point. In a modified embodiment, both the first groove and the second groove can come into contact with the AF guide ball **810** at two points.

The AF carrier **210** may comprise a groove **212.** The groove **212** may be an 'OIS-x guide ball accommodating groove'. The groove **212** may be formed on a side wall of the AF carrier **210.** The groove **212** may be formed on an inner surface of a side wall of the AF carrier **210.** The groove **212** may be formed on an inner surface of the AF carrier **210.** The groove **212** may be groove in an x-axis direction. An OIS-x guide ball **820** may be groove in the groove **212.** The groove **212** may guide the OIS-x guide ball **820** to move in an x-axis direction. The groove **212** may be in direct contact with the OIS-x guide ball **820.** The groove **212** may comprise a plurality of grooves. The groove **212** may comprise four grooves.

The AF carrier **210** may comprise a protruded portion **213.** The protruded portion **213** may be formed on an outer side surface of the AF carrier **210.** The protruded portion **213** may be protruded outwardly from the AF carrier **210.** A connection portion **862** of an outer substrate **860** may be groove on an upper surface and a lower surface of the protruded portion **213.**

Hereinafter, one of the "groove **211"** and the "groove **212"** of the AF carrier **210** may be referred to as a "first groove" and the other may be referred to as a "second groove".

The lens driving device 10 may comprise an OIS moving unit. The moving unit may comprise an OIS moving unit. The OIS moving unit may be disposed in the fixed unit **100.** The OIS moving unit may be disposed inside the fixed unit **100.** The OIS moving unit may be disposed on the fixed unit **100.** The OIS moving unit may be disposed inside the fixed unit **200.** The OIS moving unit may be disposed inside the AF moving unit **200.** The OIS moving unit may be movably disposed. The OIS moving unit may move in a direction perpendicular to the optical axis against the fixed unit **100** and the AF moving unit **200** by the OIS drive unit. The OIS moving unit may be moved during OIS driving.

The lens driving device **10** may comprise an OIS-x moving unit **300.** The OIS moving unit may comprise an OIS-x moving unit **300.** The OIS-x moving unit **300** may be disposed in the fixed unit **100.** The OIS-x moving unit **300** may be disposed inside the fixed unit **100.** The OIS-x moving unit **300** may be disposed on the fixed unit **100.** The OIS-x moving unit **300** may be disposed inside the AF moving unit **200.** The OIS-x moving unit **300** may be disposed between the fixed unit **100** and the OIS-moving unit **400.** The OIS-x moving unit **300** may be disposed between the fixed unit **100** and the OIS-moving unit **400.** The OIS-x moving unit **300** may be disposed between the AF moving unit **200** and the OIS-moving unit **400.** The OIS-x moving unit **300** may be movably disposed. The OIS-x moving unit **300** may move in an x-axis direction perpendicular to the optical axis against the fixed unit **100** and the AF moving unit **200** by the OIS-x drive unit **600.** The OIS-x moving unit **300** may move during OIS driving.

The lens driving device **10** may comprise an OIS-x carrier **310.** The OIS-x moving unit **300** may comprise an OIS-x carrier **310.** The OIS-x carrier **310** may be an OIS-x holder. The OIS-x carrier **310** may be disposed inside the AF carrier **210.** The OIS-x carrier **310** may be disposed inside the base **110.** The OIS-x carrier **310** may be disposed on the base **110.** The OIS-x carrier **310** may be disposed inside the cover **140.** The OIS-x carrier **310** may be disposed between the base **110** and the OIS-y carrier **410.** The OIS-x carrier **310** may be disposed between the AF carrier **210** and the OIS-y carrier **410.** The OIS-x carrier **310** may be disposed between the AF carrier **210** and the OIS-y carrier **410.** The OIS-x carrier **310** may be movably disposed in an x-axis direction perpendicular to the optical axis.

The OIS-x carrier **310** may comprise a groove **311.** The groove **311** may be an 'OIS-x guide ball accommodating groove'. An OIS-x guide ball **820** may be disposed in the groove **311.** The groove **311** may be in direct contact with the OIS-x guide ball **820.** The groove **311** may be disposed in a direction perpendicular to the optical axis. The groove **311** may be disposed in an x-axis direction. The groove **311** may guide the OIS-x guide ball **820** to move in an x-axis direction. The groove **311** may comprise a plurality of grooves. The groove **311** may comprise four grooves. The groove **311** may comprise a first groove being in contact with the OIS-x guide ball **820** at two points, and a second groove being in contact with the OIS-x guide ball **820** at one point. In a modified embodiment, both the first groove and the second groove can be in contact with the OIS-x guide ball **820** at two points.

The OIS-x carrier **310** may comprise a groove **312.** The groove **312** may be an 'OIS-y guide ball accommodating groove'. An OIS-y guide ball **830** may be disposed in the groove **312.** The groove **312** may be in direct contact with the OIS-y guide ball **830.** The groove **312** may be disposed in a direction perpendicular to the optical axis. The groove **312** may be disposed in a y-axis direction. The groove **312** may movably guide the OIS-y guide ball **830** in a y-axis direction. The groove **312** may comprise a plurality of grooves. The groove **312** may comprise four grooves. The groove **312** may comprise a first groove being in contact with the OIS-y guide ball **830** at two points, and a second groove being in contact with the OIS-y guide ball **830** at one point. In a modified embodiment, both the first groove and the second groove can be in contact with the OIS-y guide ball **830** at two points.

The OIS-x carrier **310** may comprise a groove. The groove may be a 'magnet accommodating groove'. The groove may be formed on an outer side surface of the OIS-x carrier **310.** An OIS-x magnet **610** may be disposed in the groove. The groove may be formed in a shape corresponding to the OIS-x magnet **610.**

Hereinafter, one among a "groove **311",** a "groove **312",** and a "magnet accommodating groove" of the OIS-x carrier **310** is referred to as a "first groove", the other is referred to as a "second groove", and yet the other may be referred to as a "third groove".

The lens driving device **10** may comprise an OIS-y moving unit **400.** The OIS moving unit may comprise an OIS-y moving unit **400.** The OIS-y moving unit **400** may be disposed in the fixed unit **100.** The OIS-y moving unit **400** may be disposed inside the fixed unit **100.** The OIS-y moving unit **400** may be disposed on the fixed unit **100.** The OIS-y moving unit **400** may be disposed inside the AF moving unit **200.** The OIS-y moving unit **400** may be disposed inside the OIS-x moving unit **300.** The OIS-y moving unit **400** may be movably disposed. The OIS-y moving unit **400** can move in a y-axis direction perpendicular to both the optical axis and the x-axis against the fixed unit **100,** the AF moving unit **200,** and the OIS-x moving unit 300 by the OIS-y drive unit **700.** The OIS-y moving unit **400** can move during OIS driving.

The lens driving device **10** may comprise an OIS-y carrier **410.** The OIS-y moving unit **400** may comprise an OIS-y carrier **410.** The OIS-y carrier **410** may be a 'bobbin'. The OIS-y carrier **410** may be an 'OIS-y holder'. The OIS-y carrier **410** may be disposed inside the OIS-x carrier **310.** The OIS-y carrier **410** may be disposed inside the AF carrier **210.** The OIS-y carrier **410** may be disposed inside the base **110.** The OIS-y carrier **410** may be disposed on the base **110.** The OIS-y carrier **410** may be disposed inside the cover **140.** The OIS-y carrier **410** can be movably disposed in a y-axis direction perpendicular to both the optical axis and the x-axis.

The OIS-y carrier **410** may comprise a groove **411.** The groove **411** may be an 'OIS-y guide ball accommodating groove'. An OIS-y guide ball **830** may be disposed in the groove **411.** The groove **411** may be in direct contact with the OIS-y guide ball **830.** The groove **411** may be disposed in a direction perpendicular to the optical axis. The groove **411** may be disposed in a y-axis direction. The groove **411** may movably guide the OIS-y guide ball **830** in a y-axis direction. The groove **411** may comprise a plurality of grooves. The groove **411** may comprise four grooves. The groove **411** may comprise a first groove being in contact with the OIS-y guide ball **830** at two points, and a second groove being in contact with the OIS-y guide ball **830** at one point. In a modified embodiment, both the first groove and the second groove may be in contact with the OIS-y guide ball **830** at two points.

The OIS-y carrier **410** may comprise a groove. The groove may be a 'magnet accommodating groove'. The groove may be formed on an outer side surface of the OIS-y carrier **410.** An OIS-y magnet **710** may be disposed in the groove. The groove may be formed in a shape corresponding to the OIS-y magnet **710.**

Hereinafter, one of a "groove **411"** and a "magnet accommodating groove" of the OIS-y carrier **410** is referred to as a "first groove" and the other may be referred to as a "second groove".

The lens driving device **10** may comprise a drive unit. The drive unit may move the moving unit against the fixed unit **100.** The drive unit may comprise an AF drive unit **500.** The drive unit may comprise an OIS drive unit. The drive unit may comprise an OIS-x drive unit **600.** The drive unit may comprise an OIS-y drive unit **700.** The drive unit may comprise a coil and a magnet.

The lens driving device **10** may comprise an AF drive unit **500.** The AF drive unit **500** may move the AF moving unit **200** in an optical axis direction. The AF drive unit **500** may move the AF carrier **210** in an optical axis direction. The AF drive unit **500** may move the AF carrier **210** in an optical axis direction through electromagnetic force. The AF drive unit **500** may comprise a coil and a magnet.

In the present embodiment, the AF carrier **210,** the OIS-x carrier **310,** and the OIS-y carrier **410** can move in an optical axis direction by the interaction between the AF coil **520** and the AF magnet **510.** The AF coil **520,** the AF carrier **210,** the OIS-x carrier **310,** and the OIS-y carrier **410** can move integrally in an optical axis direction. The AF coil **520,** the OIS-x coil **620,** the OIS-y coil **720,** the AF carrier **210,** the OIS-x carrier **310,** and the OIS-y carrier **410** can move integrally in an optical axis direction.

The lens driving device 10 may comprise an AF magnet **510.** The AF drive unit **500** may comprise an AF magnet **510.** The AF magnet **510** may be an 'AF magnet'. The AF magnet **510** may be a permanent magnet. The AF magnet **510** may be disposed in the fixed unit **100.** The AF magnet **510** may be disposed in the base **110.** The AF magnet **510** may be disposed in the cover **120.** The AF magnet **510** may be disposed in the side plate **122** of the cover **120.** The AF magnet **510** may be disposed on an outer side surface of the base **110.** The AF magnet **510** may be disposed on the inner side surface of the base **110.** The AF magnet **510** may be disposed in the side wall portion **112** of the base **110.** The AF magnet **510** may be fixed to the base **110.** The AF magnet **510** may be coupled to the base **110.** The AF magnet **510** may be attached to the base **110** with an adhesive. The AF magnet **510** may be disposed inside the cover **120.** The AF magnet **510** may interact with the AF coil **520.** The AF magnet **510** may electromagnetically interact with the AF coil **520.** The AF magnet **510** may be disposed at a position corresponding to the AF coil **520.** The AF magnet **510** and the AF coil **520** may face each other. The AF magnet **510** may face the AF coil **520.** The AF magnet **510** may be overlapped with the AF coil **520** in a direction perpendicular to the optical axis. The AF magnet **510** may be overlapped with the AF coil **520** in an x-axis direction.

The AF magnet **510** may be a four-pole magnet. The AF magnet **510** may comprise a four-pole magnetizing magnet. The AF magnet **510** may comprise a first magnet portion comprising an N pole and an S pole, and a second magnet portion comprising an N pole and an S pole. The first magnet portion and the second magnet portion may be disposed in a vertical direction. The first magnet portion and the second magnet portion may be spaced apart in a vertical direction. A neutral portion may be disposed between the first magnet portion and the second magnet portion.

The lens driving device **10** may comprise an AF coil **520.** The AF drive unit **500** may comprise an AF coil **520.** The AF coil **520** may interact with an AF magnet **510.** The AF coil **520** and the AF magnet 510 may face each other. The AF coil **520** may face the AF magnet **510.** The AF coil **520** may be disposed at a position corresponding to the AF magnet **510.** The AF coil **520** may be overlapped with the AF magnet **510** in a direction perpendicular to the optical axis. The AF coil **520** may be disposed on an inner substrate **720.** The AF coil **520** may be disposed in an AF carrier **210.** The AF coil **520** can be disposed in the AF carrier **210** through the inner substrate **720.** The AF coil **520** can move integrally with the AF carrier **210.**

In the present embodiment, the AF coil **520** can move in an optical axis direction. The AF coil **520** can move in an optical axis direction through interaction with the AF magnet **510.** The AF coil **520** can move together with the AF moving unit **200.** The AF coil **520** can move together with the AF moving unit **200** in an optical axis direction. During the AF driving process, the AF coil **520** can move together with the AF moving unit **200** in an optical axis direction. The AF coil **520** can be disposed in the AF moving unit **200.** The AF coil **520** can be fixed to the AF moving unit **200.** The AF coil **520** can be coupled to the AF moving unit **200.**

The lens driving device **10** may comprise an AF sensor **530.** The AF drive unit **500** may comprise an AF sensor **530.** The AF sensor **530** may be a Hall sensor. The AF sensor **530** may be disposed in an inner substrate **720.** The AF sensor **530** may detect the AF magnet **510.** The AF sensor **530** may detect the movement of the AF magnet **510.** The movement amount or position of the AF magnet **510** detected by the AF sensor **530** may be used for feedback of auto focus driving. The AF sensor **530** may be disposed in the AF moving unit **200.** The AF sensor **530** may be disposed in the AF carrier **210.** The AF sensor **530** may be disposed in the AF carrier **210** through the inner substrate **720.** The AF sensor **530** can move together with the AF moving unit **200.**

The AF sensor **530** may be a driver IC. The driver IC may comprise a sensing unit. The sensing unit may comprise a Hall element (Hall IC). The driver IC may be electrically connected to the AF coil **520.** The driver IC may supply current to the AF coil **520.**

The AF sensor **530** may be disposed inside the AF coil **520.** The AF sensor **530** may be overlapped with the neutral portion of the AF magnet **510** in a direction perpendicular to the optical axis. In a modified embodiment, the AF sensor **530** may be disposed outside the AF coil **520.**

The lens driving device **10** may comprise an AF yoke **540.** The AF yoke **540** may be disposed corresponding to the AF magnet **510.** The AF yoke **540** may be disposed in the AF magnet **510.** The AF yoke **540** may be disposed between the AF magnet **510** and the side plate **122** of the cover **120.** The AF yoke **540** may be disposed on the outer surface of the AF magnet **510.** The inner surface of the AF magnet **510** may face the AF coil **520.** Through this, the AF yoke **540** may minimize the leakage flux of the AF magnet **510** and increase the electromagnetic interaction force between the AF magnet **510** and the AF coil **520.**

The lens driving device **10** may comprise an OIS drive unit. The OIS drive unit may move the OIS moving unit in a direction perpendicular to the optical axis direction. The OIS drive unit may move an OIS-x carrier **310** and an OIS-y carrier **410** in a direction perpendicular to the optical axis. The OIS drive unit may move the OIS-x carrier **310** and the OIS-y carrier **410** in a direction perpendicular to the optical axis through electromagnetic force. The OIS drive unit may comprise a magnet and a coil.

The lens driving device **10** may comprise an OIS-x drive unit **600.** The OIS drive unit may comprise an OIS-x drive unit **600.** The OIS-x drive unit **600** may move an OIS-x moving unit **300** in an x-axis direction perpendicular to the optical axis direction. The OIS-x drive unit **600** may move the OIS-x carrier **310** in an x-axis direction. The OIS-x drive unit **600** may move the OIS-x carrier **310** and the OIS-y carrier **410** in an x-axis direction perpendicular to the optical axis. The OIS-x drive unit **600** may move the OIS-x carrier **310** and the OIS-y carrier **410** in an x-axis direction perpendicular to the optical axis using an electromagnetic force. The OIS-x drive unit **600** may comprise a coil and a magnet.

In the present embodiment, the OIS-x magnet **610** and the OIS-x coil **620** can move the OIS moving unit in an x-axis direction perpendicular to the optical axis direction. By the interaction of the OIS-x coil **620** and the OIS-x magnet **610,** the OIS-x carrier **310** and the OIS-y carrier **410** can move in an x-axis direction perpendicular to the optical axis direction. The OIS-x magnet **610,** the OIS-x carrier **310,** and the OIS-y carrier **410** can move integrally in an x-axis direction.

The lens driving device **10** may comprise an OIS-x magnet **610.** The OIS drive unit may comprise an OIS-x magnet **610.** The OIS-x magnet **610** may be an 'OIS-x magnet'. The OIS-x magnet **610** may be a permanent magnet. The OIS-x magnet **610** may be disposed in the OIS moving unit. The OIS-x magnet **610** may be spaced apart from the AF magnet **510.** The OIS-x magnet **610** may be disposed in the OIS-x moving unit **300.** The OIS-x magnet **610** may be disposed in the OIS-x carrier **310.** The OIS-x magnet **610** may be disposed on an outer side surface of the OIS-x carrier **310.** The OIS-x magnet **610** can be fixed to the OIS-x carrier **310.** The OIS-x magnet **610** can be coupled to the OIS-x carrier **310.** The OIS-x magnet **610** can be attached to the OIS-x carrier **310** with an adhesive. The OIS-x magnet **610** can be disposed inside the cover **120.** The OIS-x magnet **610** can interact with the OIS-x coil **620.** The OIS-x magnet **610** can electromagnetically interact with the OIS-x coil **620.** The OIS-x magnet **610** can be disposed at a position corresponding to the OIS-x coil **620.** The OIS-x magnet **610** and the OIS-x coil **620** may face each other. The OIS-x magnet **610** can face the OIS-x coil **620.** The OIS-x magnet **610** can be overlapped with the OIS-x coil **620** in a direction perpendicular to the optical axis. The OIS-x magnet **610** can be overlapped with the OIS-x coil **620** in a y-axis direction. The OIS-x magnet **610** can move in an x-axis direction.

The OIS-x magnet **610** may be a four-pole magnet. The OIS-x magnet **610** may comprise a four-pole magnetizing magnet. The OIS-x magnet **610** may comprise a first magnet portion comprising an N pole and an S pole, and a second magnet portion comprising an N pole and an S pole. The first magnet portion and the second magnet portion may be disposed in a horizontal direction. The first magnet portion and the second magnet portion may be spaced apart in a horizontal direction. A neutral portion may be disposed between the first magnet portion and the second magnet portion.

The lens driving device **10** may comprise an OIS-x coil **620.** The OIS drive unit may comprise an OIS-x coil **620.** The OIS-x coil **620** may interact with an OIS-x magnet **610.** The OIS-x coil **620** may move the OIS-x magnet **610** in an x-axis direction perpendicular to the optical axis. The OIS-x coil **620** may move the OIS-x magnet **610** in an x-axis direction through interaction with the OIS-x magnet 610. The OIS-x coil **620** and the OIS-x magnet **610** may face each other. The OIS-x coil **620** may face the OIS-x magnet **610.** The OIS-x coil **620** may be disposed at a position corresponding to the OIS-x magnet **610.** The OIS-x coil **620** may be overlapped with the OIS-x magnet **610** in a direction perpendicular to the optical axis. The OIS-x coil **620** may be overlapped with the OIS-x magnet **610** in a y-axis direction. The OIS-x coil **620** may be disposed in the inner substrate **720.** The OIS-x coil **620** may be disposed in the AF carrier **210.** The OIS-x coil **620** may be disposed in the AF carrier **210** through the inner substrate **720.** The OIS-x coil **620** may move integrally with the AF moving unit **200.**

In the present embodiment, the OIS-x coil **620** can move together with the AF moving unit **200.** The OIS-x coil **620** can move in an optical axis direction together with the AF moving unit **200.** During the AF driving process, the OIS-x coil **620** can move in an optical axis direction together with the AF moving unit **200.** The OIS-x coil **620** can be disposed in the AF moving unit **200.** The OIS-x coil **620** can be fixed to the AF moving unit **200.** The OIS-x coil **620** can be coupled to the AF moving unit **200.**

The lens driving device **10** may comprise an OIS-x sensor **630.** The OIS drive unit may comprise an OIS-x sensor **630.** The OIS-x sensor **630** may be disposed in an inner substrate **720.** The OIS-x sensor **630** may be disposed in an AF carrier **210.** The OIS-x sensor **630** may be disposed in an OIS moving unit **200.** The OIS-x sensor **630** may comprise a Hall sensor. The OIS-x sensor **630** may detect an OIS-x magnet **610.** The OIS-x sensor **630** may detect a magnetic force of the OIS-x magnet **610.** The OIS-x sensor **630** may be disposed at a lower side of the OIS magnet **520.** The OIS-x sensor **630** may be overlapped with the OIS-magnet **520** in an optical axis direction. In a modified embodiment, the OIS-x sensor **630** may be disposed inside the OIS-x coil **620.** At this time, the OIS-x sensor **630** may be overlapped with the OIS-x coil **620** in an optical axis direction. The OIS-x sensor **630** may face the OIS-x magnet **610.** The OIS-x sensor **630** may be disposed at a position corresponding to the OIS-x magnet **610.** The OIS-x sensor **630** may detect the movement of the OIS-x magnet **610.** The amount of movement or position of the OIS-x magnet **610** detected by the OIS-x sensor **630** may be used for feedback of the handshake correction drive in an x-axis direction.

The lens driving device **10** may comprise an OIS-x yoke **640.** The OIS-x yoke **640** may be disposed in the OIS-x magnet **610.** The OIS-x yoke **640** may be disposed between the OIS-x magnet **610** and the OIS-x carrier **310.** The OIS-x yoke **640** may prevent magnetic flux leakage of the OIS-x magnet **610** and enhance interaction force with the OIS-x coil **620.**

The lens driving device **10** may comprise an OIS-y drive unit **700.** The OIS drive unit may comprise an OIS-y drive unit **700.** The OIS-y drive unit **700** may move the OIS-y moving unit **400** in a y-axis direction perpendicular to both the optical axis direction and the x-axis direction. The OIS-y drive unit **700** may move the OIS-y carrier **410** in a y-axis direction perpendicular to both the optical axis and the x-axis direction. The OIS-y drive unit **700** may move the OIS-y carrier **410** in a y-axis direction perpendicular to both the optical axis and the x-axis direction through electromagnetic force. The OIS-y drive unit **700** may comprise a coil and a magnet.

In the present embodiment, the OIS-y magnet **710** and the OIS-y coil **720** can move the OIS moving unit in a y-axis direction perpendicular to the optical axis direction and the x-axis direction. By the interaction of the OIS-y coil **720** and the OIS-y magnet **710,** the OIS-y carrier **410** can move in an y-axis direction perpendicular to both the optical axis direction and the x-axis direction. The OIS-y magnet **710** and the OIS-y carrier **410** can move integrally in a y-axis direction. The OIS-y magnet **710** can be overlapped with the AF magnet **510** in an x-axis direction.

The lens driving device **10** may comprise an OIS-y magnet **710.** The OIS-y drive unit **700** may comprise an OIS-y magnet **710.** The OIS-y magnet **710** may be an 'OIS-y magnet'. The OIS-y magnet **710** may be a permanent magnet. The OIS-y magnet **520** may be disposed in the OIS moving unit. The OIS-y magnet **710** may be spaced apart from the OIS-x magnet **610.** The OIS-y magnet **710** may be spaced apart from the AF magnet **510.** The OIS-y magnet **710** may be disposed in the OIS-y moving unit **400.** The OIS-y magnet **710** can be disposed in the OIS-y carrier **410.** The OIS-y magnet **710** can be disposed on an outer side surface of the OIS-y carrier **410.** The OIS-y magnet **710** can be fixed to the OIS-y carrier **410.** The OIS-y magnet **710** can be coupled to the OIS-y carrier **410.** The OIS-y magnet **710** can be attached to the OIS-y carrier **410** with an adhesive. The OIS-y magnet **710** can be disposed inside the cover **120.** The OIS-y magnet **710** can interact with the OIS-y coil **720.** The OIS-y magnet **710** can electromagnetically interact with the OIS-y coil **720.** The OIS-y magnet **710** can be disposed at a position corresponding to the OIS-y coil **720.** The OIS-y magnet **710** and the OIS-y coil **720** can face each other. The OIS-y magnet **710** can face the OIS-y coil **720.** The OIS-y magnet **710** can be overlapped with the OIS-y coil **720** in a direction perpendicular to the optical axis. The OIS-y magnet **710** can be overlapped with the OIS-y coil **720** in an x-axis direction. The OIS-y magnet **710** can move in a y-axis direction.

The OIS-y magnet **710** may be a four-pole magnet. The OIS-y magnet **710** may comprise a four-pole magnetizing magnet. The OIS-y magnet **710** may comprise a first magnet portion comprising an N pole and an S pole, and a second magnet portion comprising an N pole and an S pole. The first magnet portion and the second magnet portion may be disposed in a horizontal direction. The first magnet portion and the second magnet portion may be spaced apart in the horizontal direction. A neutral portion may be disposed between the first magnet portion and the second magnet portion.

The lens driving device **10** may comprise an OIS-y coil **720.** The OIS-y drive unit **700** may comprise an OIS-y coil **720.** The OIS-y coil **720** may interact with the OIS-y magnet **710.** The OIS-y coil **720** may be disposed at an opposite side of the AF coil **520** with respect to the optical axis. The OIS-y coil **720** may move the OIS-y magnet **710** in a y-axis direction perpendicular to both the optical axis and the x-axis. The OIS-y coil **720** may move the OIS-y magnet **710** in a y-axis direction through interaction with the OIS-y magnet **710.** The OIS-y coil **720** and the OIS-y magnet **710** may face each other. The OIS-y coil **720** may face the OIS-y magnet **710.** The OIS-y coil **720** may be disposed at a position corresponding to the OIS-y magnet **710.** The OIS-y coil **720** may be overlapped with the OIS-y magnet **710** in a direction perpendicular to the optical axis. The OIS-y coil **720** may be overlapped with the OIS-y magnet **710** in an x-axis direction. The OIS-y coil **720** may be disposed in the inner substrate **720.** The OIS-y coil **720** may be disposed in the inner substrate **720.** The OIS-y coil **720** may be disposed in the AF carrier **200.** The OIS-y coil **720** can be disposed in the AF carrier **210** through the inner substrate **720.** The OIS-y coil **720** can move integrally with the AF moving unit **200.**

In the present embodiment, the OIS-y coil **720** can move together with the AF moving unit **200.** The OIS-y coil **720** can move in an optical axis direction together with the AF moving unit **200.** During the AF driving process, the OIS-y coil **720** can move in an optical axis direction together with the AF moving unit **200.** The OIS-y coil **720** can be disposed in the AF moving unit **200.** The OIS-y coil **720** can be fixed to the AF moving unit **200.** The OIS-y coil **720** can be coupled to the AF moving unit **200.**

The lens driving device **10** may comprise an OIS-y sensor **730.** The OIS-y drive unit **700** may comprise an OIS-y sensor **730.** The OIS-y sensor **730** may be disposed in an inner substrate **720.** The OIS-y sensor **730** may be disposed in an AF carrier **210.** The OIS-y sensor **730** may be disposed in an OIS moving unit **200.** The OIS-y sensor **730** may comprise a Hall sensor. The OIS-y sensor **730** may detect an OIS-y magnet **710.** The OIS-y sensor **730** may detect a magnetic force of the OIS-y magnet **710.** The OIS-y sensor **730** may be disposed at a lower side of the OIS-y magnet **620.** The OIS-y sensor **730** may be overlapped with the OIS-y magnet **620** in an optical axis direction. In a modified embodiment, the OIS-y sensor **730** may be disposed inside the OIS-y coil **720.** At this time, the OIS-y sensor **730** may be overlapped with the OIS-y coil **720** in an optical axis direction. The OIS-y sensor **730** may face the OIS-y magnet **710.** The OIS-y sensor **730** may be disposed at a position corresponding to the OIS-y magnet **710.** The OIS-y sensor **730** may detect the movement of the OIS-y magnet **710.** The amount of movement or position of the OIS-y magnet **710** detected by the OIS-y sensor **730** may be used for feedback of the handshake correction drive in a y-axis direction.

The lens driving device **10** may comprise an OIS-y yoke **740.** The OIS-y yoke **740** may be disposed in the OIS-y magnet **710.** The OIS-y yoke **740** may be disposed between the OIS-y magnet **710** and the OIS-y carrier **410.** The OIS-y yoke **740** may prevent magnetic flux leakage of the OIS-y magnet **710** and enhance interaction with the OIS-y coil **720.**

When viewed from above, the AF magnet **510,** the AF coil **520,** the OIS-y magnet **710,** and the OIS-y coil **720** can be disposed in order on a virtual straight line. When viewed from above, the AF magnet **510,** the AF coil **520,** the OIS-y magnet **710,** and the OIS-y coil **720** can be disposed in order on a virtual straight line. When viewed from above, the AF magnet **510,** the AF coil **520,** the OIS-y magnet **710,** and the OIS-y coil **720** can be disposed in order. When viewed from above, the AF magnet **510,** the AF coil **520,** the OIS-y magnet **710,** and the OIS-y coil **720** can be disposed in order in an x-axis direction. When viewed from above, the AF magnet **510,** the AF coil **520,** the OIS-y magnet **710,** and the OIS-y coil **720** can be overlapped in an x-axis direction.

When viewed from above, the AF magnet **510,** the AF coil **520,** the OIS-y magnet **710,** and the OIS-y coil **720** may be sequentially disposed on a first imaginary straight line parallel to an x-axis direction. When viewed from above, the AF magnet **510,** the AF coil **520,** the OIS-y magnet **710,** and the OIS-y coil **720** may be sequentially disposed on a first imaginary straight line parallel to an x-axis direction. When viewed from above, the AF magnet **510,** the AF coil **520,** the OIS-y magnet **710,** and the OIS-y coil **720** may be sequentially superimposed on a first imaginary straight line parallel to an x-axis direction.

When viewed from above, the AF magnet **510,** the AF coil **520,** the magnet **910,** and the yoke **920** may be sequentially disposed on a virtual second straight line parallel to an x-axis direction. When viewed from above, the AF magnet **510,** the AF coil **520,** the magnet **910,** and the yoke **920** may be sequentially disposed on a virtual second straight line parallel to an x-axis direction. When viewed from above, the AF magnet **510,** the AF coil **520,** the magnet **910,** and the yoke **920** may be sequentially overlapped on a virtual second straight line parallel to an x-axis direction.

In the present embodiment, the cover **120** may comprise a first side plate and a second side plate being disposed opposite to each other, and a third side plate and a fourth side plate being disposed opposite to each other. An AF drive unit **500** may be disposed at a position corresponding to the first side plate of the cover **120,** an OIS-x drive unit **600** may be disposed at a position corresponding to the third side plate of the cover **120,** and an OIS-y drive unit **700** may be disposed at a position corresponding to the second side plate of the cover **120.**

The lens driving device **10** may comprise a guide member. The guide member may comprise a ball. The guide member may comprise a pin. The guide member may comprise a cylindrical member. The guide member may guide movement of the moving unit against the fixed unit **100** in a specific direction.

The lens driving device **10** may comprise an AF guide ball **810.** The AF guide ball 810 may guide movement of the AF carrier **210** against the base **110** in an optical axis direction. The AF guide ball **810** may be disposed between the fixed unit **100** and the AF moving unit **200.** The AF guide ball **810** may be disposed between the base **110** and the AF carrier **210.** The AF guide ball **810** may be disposed between the base **110** and the AF carrier **210** in an x direction. The AF guide ball **810** may comprise a ball being disposed in a groove **113** of the base **110.** The AF guide ball **810** may comprise a ball being disposed in a metal member **940.** The AF guide ball **810** may be disposed in a groove **211** of the AF carrier **210.** The AF guide ball **810** may have a spherical shape. The AF guide ball **810** may be formed of metal. Grease may be applied to the surface of the AF guide ball **810.**

The AF guide ball **810** may be disposed at the first corner of the base 110. The AF guide ball **810** may be disposed at the second corner opposite the first corner of the base **110.** The AF guide ball **810** may be disposed at a first corner and a second corner of the base **110.** The AF guide ball **810** may be disposed in two sets at each of the first corner and the second corner of the base **110.** At this time, one set may comprise four balls. The two sets may be disposed at an opposite side of the pillar portion of the AF carrier **210.**

The AF guide ball **810** may comprise a plurality of balls. The AF guide ball **810** may comprise eight balls. The eight balls may be disposed in two sets of four balls each on one side. The four balls may have different sizes. Two large balls may be disposed at an upper end and a lower end, and two small balls may be disposed therebetween. Four AF guide balls **810** may be disposed at one side of the AF magnet **510,** and the remaining four AF guide balls **810** may be disposed at the other side of the AF magnet **510.**

Two of the four sets of AF guide balls **810** can be in direct contact with the base **110** and the AF carrier **210.** The remaining two of the four sets of AF guide balls **810** can be in direct contact with the AF carrier **210** and the metal member **940.**

The lens driving device **10** may comprise an OIS-x guide ball **820.** The OIS-x guide ball **820** may guide movement of the OIS-x carrier **310** against the AF carrier **210** in an x-axis direction. The OIS-x guide ball **820** may be disposed between the AF moving unit **200** and the OIS-x moving unit **300.** The OIS-x guide ball **820** may be disposed between the AF carrier **210** and the OIS-x carrier **310.** The OIS-x guide ball **820** may be disposed between the AF carrier **210** and the OIS-x carrier **310** in a y-axis direction. The entire area from the lower end to the upper end of the OIS-x guide ball **820** may be overlapped with both the AF carrier **210** and the OIS-x carrier **310** in a y-axis direction. The entire area of the OIS-x guide ball **820** may be overlapped with the AF carrier **210** and the OIS-x carrier **310** in a y-axis direction. The OIS-x guide ball **820** may be disposed between the inner side surface of the AF carrier **210** and the outer side surface of the OIS-x carrier **310.** When viewed from the outside of the OIS-x carrier **310,** the OIS-x guide ball **820** may be overlapped with the OIS-x magnet **610** in a horizontal direction.

The OIS-x guide ball **820** may be disposed in the groove **212** of the AF carrier **210.** The OIS-x guide ball **820** may be disposed in the groove **311** of the OIS-x carrier **310.** The OIS-x guide ball **820** may comprise a first ball being in contact with the AF carrier **210** and the OIS-x carrier **310** at four points, and a second ball being in contact with the AF carrier **210** and the OIS-x carrier **310** at three points. The OIS-x guide ball **820** may have a spherical shape. The OIS-x guide ball **820** may be formed of metal. Grease may be applied to the surface of the OIS-x guide ball **820.**

The OIS-x guide ball **820** may comprise a plurality of balls. The OIS-x guide ball **820** may comprise four balls. Two OIS-x guide balls **820** may be disposed at one side of the OIS-x magnet **610,** and the remaining two OIS-x guide balls **820** may be disposed at the other side of the OIS-x magnet **610.**

The lens driving device **10** may comprise an OIS-y guide ball **830.** The OIS-y guide ball **830** may guide the movement of the OIS-y carrier **410** against the OIS-x carrier **310** in a y-axis direction. The OIS-y guide ball **830** may be extension portion between the OIS-x moving unit **300** and the OIS-y moving unit **400.** The OIS-y guide ball **830** may be extension portion between the OIS-x carrier **310** and the OIS-y carrier **410.** The OIS-y guide ball **830** may be extension portion between the OIS-x carrier **310** and the OIS-y carrier **410** in an x-axis direction. The entire area from the lower end to the upper end of the OIS-y guide ball **830** can be overlapped with both the OIS-x carrier **310** and the OIS-y carrier **410** in an x-axis direction. The OIS-y guide ball **830** can be disposed between an inner side surface of the OIS-x carrier **310** and an outer side surface of the OIS-y carrier **410.** When viewed from the outside of the OIS-y carrier **410,** the OIS-y guide ball **830** can be overlapped with the OIS-y magnet **710** in a horizontal direction. Here, the horizontal direction can be any direction perpendicular to the optical axis.

A portion of the OIS-y guide ball **830** may be overlapped with the OIS-x carrier **310** in a y-axis direction. The other portion of the OIS-y guide ball **830** may be overlapped with the OIS-y carrier **410** in a y-axis direction.

The OIS-y guide ball **830** may be disposed in the groove **312** of the OIS-x carrier **310.** The OIS-y guide ball **830** may be disposed in the groove **411** of the OIS-y carrier **410.** The OIS-y guide ball **830** may comprise a first ball being in contact with the OIS-x carrier **310** and the OIS-y carrier **410** at four points, and a second ball being in contact with the OIS-x carrier **310** and the OIS-y carrier **410** at three points. The OIS-y guide ball **830** may have a spherical shape. The OIS-y guide ball **830** may be formed of metal. Grease may be applied to the surface of the OIS-y guide ball **830.**

The OIS-y guide ball **830** may comprise a plurality of balls. The OIS-y guide ball **830** may comprise four balls. Two OIS-y guide balls **830** may be disposed at one side of the OIS-y magnet **710,** and the remaining two OIS-y guide balls **830** may be disposed at the other side of the OIS-y magnet **710.**

The lens driving device **10** may comprise substrates **860** and **870.** The substrates **860** and **870** may comprise a flexible printed circuit board (FPCB). The substrates **860** and **870** may be electrically connected to the coils **520, 620,** and **720.** The substrates **860** and **870** may be electrically connected to the sensors **530, 6530,** and **730.**

The lens driving device **10** may comprise an outer substrate **860.** The outer substrate **860** may be disposed in the base **110.** The outer substrate **860** may be electrically connected to the coils **520, 620,** and **720.** The outer substrate **860** may be electrically connected to the sensors **530, 630,** and **730.** The outer substrate **860** may connect the AF carrier **210** to the base **110.** The outer substrate **860** may elastically connect the AF carrier **210** to the base **110.** The outer substrate **860** may movably support the AF carrier **210** against the base **110.** The outer substrate **860** may guide the AF carrier **210** to move in an optical axis direction against the base **110.** The outer substrate **860** may comprise a flexible substrate. The outer substrate **860** may comprise a flexible printed circuit board (FPCB). The outer substrate **860** may comprise an elastic portion. The outer substrate **860** may comprise a member having elasticity. The outer substrate **860** may comprise an elastic member. The outer substrate **860** may be disposed in the fixed unit **100.** The outer substrate **860** may comprise an outer portion **861** being disposed in the fixed unit **100,** and a connection portion **862** being extended from the outer portion **861** and coupled to the inner substrate **870.**

The outer substrate **860** may comprise an outer portion **861.** The outer portion **861** may be disposed on the base **110.** The outer portion **861** may be formed to surround a side surface of the base **110.** The outer portion **861** may be disposed on three side surfaces of the base **110.** The outer portion **861** may comprise two terminal portions. The two terminal portions may be disposed opposite to each other with respect to an optical axis. The terminal portion may comprise the terminal **862-1.**

The outer substrate **860** may comprise a terminal **861-1.** The outer portion **861** of the outer substrate **860** may comprise a terminal **861-1.** The terminal **861-1** may be electrically connected to the terminal **862-1.** The terminal **861-1** may be disposed at a lower end of the base **110.** The terminal **861-1** may be coupled to the printed circuit board **50.** The terminal **861-1** may be coupled to a terminal of the printed circuit board **50** through a solder. The terminal **861-1** may be coupled to a terminal of the printed circuit board **50** through a conductive member. The terminal **861-1** may be connected to a terminal of the printed circuit board **50.** The terminal **861-1** may be electrically connected to a terminal of the printed circuit board **50.**

The outer substrate **860** may comprise a connection portion **862.** The connection portion **862** may be an extension portion. The connection portion 862 may be a leg portion. The connection portion **862** may extend from the outer part 861. At least a portion of the connection portion **862** may move together with the AF carrier **210.** The extension portion may be extended from the outer portion 861. At least a portion of the extension portion may move together with the AF carrier **210.** At least a part of the connection portion **862** may be disposed perpendicular to the optical axis direction. As a modified embodiment, at least a portion of the connection portion **862** may be disposed in parallel with an optical axis direction. The connection portion **862** of the outer substrate **860** may be movably coupled to the inner substrate **870** so that the inner substrate **870** can be moved in an optical axis direction.

The connection portion **862** may comprise a plurality of connection portions. The connection portion **862** may comprise a first connection portion and a second connection portion. The second connection portion may be positioned below the first connection portion.

The outer substrate **860** may comprise a terminal **862-1.** The connection portion **862** of the outer substrate **860** may comprise a terminal **862-1.** The terminal **862-1** may be coupled to a terminal **871-1** of the inner substrate **870.** The terminal **862-1** of the outer substrate **860** may be coupled to the terminal **871-1** of the inner substrate **870** through a solder. The terminal **862-1** of the outer substrate **860** may be coupled to the terminal **871-1** of the inner substrate **870** through a conductive member. The terminal **862-1** of the outer substrate **860** may be connected to the terminal **871-1** of the inner substrate **870.** The terminal **862-1** of the outer substrate **860** can be electrically connected to the terminal **871-1** of the inner substrate **870.**

Hereinafter, any one of a 'terminal **861-1'** and a 'terminal **862-1'** of the outer substrate **860** is referred to as a 'first terminal' and the other may be referred to as a 'second terminal'.

The lens driving device **10** may comprise an inner substrate **870.** The inner substrate **870** may be electrically connected to coils **520, 620,** and **720.** The inner substrate **870** may be electrically connected to sensors **530, 630,** and **730.** The inner substrate **870** may be disposed in the AF moving unit **200.** The inner substrate **870** may be disposed in the AF carrier **210.** The inner substrate **870** may be fixed to the AF carrier **210.** The inner substrate **870** may be coupled to the AF carrier **210.** The inner substrate **870** may be attached to the AF carrier **210** with an adhesive. The inner substrate **870** may comprise a flexible substrate. The inner substrate **870** may comprise a flexible printed circuit board (FPCB). The inner substrate **870** may comprise an elastic portion. The inner substrate **870** may comprise an elastic member.

The inner substrate **870** may comprise a side plate portion **871.** The side plate portion **871** may be extension portion on a side surface of the AF carrier **210.** The side plate portion **871** may be extension portion on an outer side surface of the AF carrier **210.** In another embodiment, the side plate portion **871** may be extension portion on an inner surface of the AF carrier **210.** The side plate portion **871** of the inner substrate **870** may comprise a plurality of portions. The side plate portion **871** may comprise first to fourth portions.

The inner substrate **870** may comprise a first portion. The first portion may be extension portion in the AF carrier **210.** The first portion may be extension portion on a first side of the AF carrier **210.** The AF coil **520** may be extension portion in a first portion of the inner substrate **870.** The AF sensor **530** may be extension portion on a first portion of the inner substrate **870.** The AF yoke **540** may be extension portion on the first portion of the inner substrate 870.

The inner substrate **870** may comprise a second portion. The second portion may be disposed at the opposite side of the first portion. The second portion may be disposed in the AF carrier **200.** The second portion may be disposed on a second side surface of the AF carrier **200.** The OIS-y coil **720** may be disposed in a second portion of the inner substrate **870.** The OIS-y sensor **730** may be disposed in a second portion of the inner substrate **870.** In more detail, the OIS-y sensor **730** may be disposed on a lower plate portion **872** being bent and disposed at a lower side of the second portion of the inner substrate **870.** The OIS-y sensor **730** may be disposed on an upper surface of the lower plate portion **872.**

The inner substrate **870** may comprise a third portion. The third portion may be disposed in the AF carrier **200.** The third portion may be disposed on a third side surface of the AF carrier **200.** The OIS-x coil **620** may be disposed at a third portion of the inner substrate **870.** The OIS-x sensor **630** may be disposed in the third portion of the inner substrate **870.** In more detail, the OIS-x sensor **630** may be disposed in a lower plate portion **872** being bent and disposed at a lower side of the third portion of the inner substrate **870.** The OIS-x sensor **630** may be disposed on an upper surface of the lower plate portion **872.**

The inner substrate **870** may comprise a fourth portion. The fourth portion may be disposed at an opposite side of the third portion. The fourth portion may be disposed in the AF carrier **200.** The fourth portion may be disposed on a fourth side surface of the AF carrier **200.**

The inner substrate **870** may comprise a terminal **871-1.** A terminal **871-1** may be disposed in a fourth portion of the inner substrate **870.** The terminal **871-1** may be electrically connected to coils **520, 620,** and **720.** The terminal **871-1** may be electrically connected to sensors **530, 6530,** and **730.**

The lens driving device may comprise an AF guide ball pressurizing member. The AF guide ball pressurizing member may pressurize the AF guide ball **810.** The AF guide ball pressurizing member may keep the AF guide ball **810** in contact with the fixed unit **100** and the AF moving unit **200.** The AF guide ball pressurizing member may keep the AF guide ball **810** in contact with the base **110** and the AF carrier **210.**

The AF guide ball pressurizing member may comprise a pressurizing member. The pressurizing member may comprise an elastic member **930.** The pressurizing member may comprise an attractive member. The pressurizing member may comprise a repulsive member.

The lens driving device may comprise an elastic member **930.** The elastic member **930** may be a spring. The elastic member **930** may be a tapered spring. The elastic member **930** may be disposed in the fixed unit **100.** The elastic member **930** may press the AF guide ball **810** toward the AF moving unit **200.** In a modified embodiment, the elastic member **930** may be disposed in the AF moving unit **200.** At this time, the elastic member **930** may press the AF guide ball **810** toward the fixed unit **100.** The elastic member **930** may be disposed in one of the fixed unit **100** and the AF moving unit **200** to press the AF guide ball **810** toward the other one of the fixed unit **100** and the AF moving unit **200.** The elastic member **930** can pressurize the metal member **940.** The elastic member **930** can be disposed between the metal member **940** and the base **110.** The elastic member **930** can be disposed between the AF guide ball **810** and the base **110.** The elastic member **930** can be disposed in the base **110.** The elastic member **930** can pressurize the AF guide ball **810** toward the AF carrier **210.** Through this, the AF guide ball **810** can be maintained in contact with the metal member **940** and the AF carrier **210.**

The lens driving device may comprise a metal member **940.** The metal member **940** may be disposed between the elastic member **930** and the AF guide ball **810.** The metal member **940** may press the AF guide ball **810** toward the AF carrier **210** by the elastic member **930.**

The lens driving device may comprise a cover **945.** The cover **945** may be disposed above the AF guide ball **810.** The cover **945** may be overlapped with the AF guide ball **810** in an optical axis direction. The cover **945** may be disposed on the groove **113** of the base **110** and the groove **211** of the AF carrier **210** to prevent the AF guide ball **810** from being separated upward.

In a modified embodiment, the AF ball pressurizing member may comprise a yoke. The yoke may pressurize the first moving unit **200** against the fixed unit **100.** The yoke may be in contact with the first moving unit **200** against the fixed unit **100.** The yoke may pressurize the first moving unit **200** toward the fixed unit **100.** The yoke may be disposed to exert an attractive force on the AF magnet **510.** The yoke may be disposed in the inner substrate **870.** The yoke may be disposed at a position corresponding to the AF magnet **510.** The "yoke" of the modified embodiment may also be referred to as a "first yoke," a "second yoke," and the like. The yoke may be understood as a component of the first moving unit **200.** Or, the yoke may be coupled to the first moving unit **200** in a separate configuration from the first moving unit **200.**

The lens driving device may comprise an OIS-x guide ball pressurizing member. The OIS-x guide ball pressurizing member may pressurize the OIS-x guide ball **820.** The OIS-x guide ball pressurizing member may allow the OIS-x guide ball **820** to maintain the state in which the AF moving unit **200** is in contact with the OIS-x moving unit **300.** The OIS-x guide ball pressurizing member may allow the OIS-x guide ball **820** to maintain the state in which the AF carrier **210** is in contact with the OIS-x carrier **310.**

The lens driving device may comprise a yoke **950.** The yoke **950** may be an 'attractive force yoke'. The yoke **950** may be disposed at a position corresponding to the OIS-x magnet **610.** An attractive force may be applied between the yoke **950** and the OIS-x magnet **610.** The OIS-x guide ball **820** may maintain the state in which the AF carrier **210** is in contact with the OIS-x carrier **310** by the attractive force between the yoke **950** and the OIS-x magnet **610.** The yoke **950** may be disposed in the AF carrier **210.** The yoke **950** may move integrally with the AF carrier **210.** The yoke **950** may be disposed in the inner substrate **870.** The yoke **950** may be disposed on an outer surface of the inner substrate **870.** The yoke **950** may be disposed at an opposite side of the OIS-x coil **620** of the inner substrate **870.** The yoke **950** may press the OIS-x carrier **310** against the AF carrier **210.** The yoke **950** may press the guide frame against the first moving unit **200.** The yoke **950** may be in contact with the OIS-x carrier **310** against the AF carrier **210.** The yoke **950** may press the OIS-x carrier **310** toward the AF carrier **210.** The yoke **950** may be understood as a component of the first moving unit **200.** Or, the yoke **950** may be coupled to the first moving unit **200** as a separate configuration from the first moving unit **200.**

The lens driving device may comprise an OIS-y guide ball pressurizing member. The OIS-y guide ball pressurizing member may pressurize the OIS-y guide ball **830.** The OIS-y guide ball pressurizing member may maintain the OIS-y guide ball **830** in the state in which the OIS-x moving unit **300** is in contact with the OIS-y moving unit **400.** The OIS-y guide ball pressurizing member may maintain the OIS-y guide ball **830** in the state in which the OIS-x carrier **310** is in contact with the OIS-y carrier **410.**

The lens driving device may comprise a magnet **910.** The magnet **910** may be an 'attractive force magnet'. The magnet **910** may be disposed in the OIS-y moving unit **400.** The magnet **910** may be spaced apart from the OIS-y magnet **710.** The magnet **910** may not interact with the OIS-y coil **720.**

The lens driving device may comprise a yoke **915.** The yoke **915** may be disposed at a position corresponding to the magnet **910.** The yoke **915** may be disposed in the magnet **910.** The yoke **915** may be disposed between the magnet **910** and the OIS-y carrier **410.** The yoke **915** may be disposed at an inner surface of the magnet **910.** The outer surface of the magnet **910** may face the yoke **920.** Through this, the yoke **915** may minimize the leakage flux of the magnet **910** and increase the attractive force between the magnet **910** and the yoke **920.**

The lens driving device may comprise a yoke **920.** The yoke **920** may be an 'attractive force yoke'. The yoke **920** may be disposed at a position corresponding to the magnet **910.** An attractive force may be applied between the yoke **920** and the magnet **910.** The OIS-y guide ball **830** may maintain the state in which the OIS-x carrier **310** is in contact with the OIS-y carrier **410** by the attractive force between the yoke **920** and magnet **910.** The yoke **920** may be disposed on the OIS-x carrier **310.** The yoke **920** may move integrally with the OIS-x carrier **310.** The yoke **920** may be disposed in the OIS-x moving unit **300.** The yoke **920** may be disposed in the OIS-x moving unit **300** so that the magnet **910** and the attractive force act thereon. The yoke **920** can press the OIS-y carrier **410** against the OIS-x carrier **310.** The yoke **920** can press the bobbin against the guide frame. The yoke **920** can be in contact with the OIS-y carrier **410** against the OIS-x carrier **310.** The yoke **920** can press the OIS-y carrier **410** toward the OIS-x carrier **310.**

In a modified embodiment, the yoke **920** can bring the OIS-y carrier **410** to be in close contact with the AF carrier **210.** The yoke **920** can bring the bobbin to be in close contact with the first moving unit **200.** The yoke **920** can bring the OIS-y carrier **410** to be in close contact with the AF carrier **210.** The yoke **920** can press the OIS-y carrier **410** toward the AF carrier **210.** At this time, the yoke **920** can be understood as a component of the first moving unit **200.** Or, the yoke **920** may be coupled to the first moving unit **200** as a separate configuration from the first moving unit **200.**

In the present embodiment, when the OIS-x moving unit **300** is moved in an x-axis direction by the OIS-x drive unit **600,** the distance between the magnet **910** and the yoke **920** in an x-axis direction may be maintained. At this time, a distance between the OIS-y magnet **710** and the OIS-y coil **720** in an x-axis direction may be varied.

Hereinafter, an auto-focus (AF) driving of the lens driving device according to the present embodiment will be described with reference to the drawings.

FIGS. 27 to 29 are diagrams for explaining the auto focus driving of a lens driving device according to the present embodiment. FIG. 27 is a cross-sectional view illustrating the appearance of a moving unit in an initial state where no current is applied to the AF coil; FIG. 28 is a cross-sectional view illustrating the appearance where a moving unit moves upward in an optical axis direction when a forward current is applied to an AF coil; and FIG. 29 is a cross-sectional view illustrating the appearance where a moving unit moves downward in an optical axis direction when a reverse current is applied to an AF coil.

As illustrated in FIG. 27, at an initial position where no current is applied to the AF coil **520,** the moving unit may be disposed at a position being spaced apart from both the upper plate **121** and the base **110** of the cover **120.** At this time, the moving unit may be the AF moving unit **200.** In addition, the moving unit may comprise an AF moving unit **200** and an OIS moving unit.

When a forward current is applied to the AF coil **520,** the AF coil **520** may move upward in an optical axis direction by an electromagnetic interaction between the AF coil **520** and the AF magnet **510** (see **A** of FIG. 28). At this time, the AF carrier **210** may move upward in an optical axis direction together with the AF coil **520.** Furthermore, the OIS-x carrier **310,** the OIS-y carrier **410,** and the lens may move upward in an optical axis direction together with the AF carrier **210.** Accordingly, the distance between the lens and the image sensor may be changed to adjust a focus of an image being formed on the image sensor through the lens.

When a reverse current is applied to the AF coil **520,** the AF coil **520** may move to a lower side of the optical axis direction by an electromagnetic interaction between the AF coil **520** and the AF magnet **510** (see **B** of FIG. 29). At this time, the AF carrier **210** may move downward in an optical axis direction together with the AF coil **520.** Furthermore, the OIS-x carrier **310,** the OIS-y carrier **410,** and the lens may move downward in an optical axis direction together with the AF carrier **210.** Accordingly, a distance between the lens and the image sensor may be changed to adjust a focus of an image being formed on the image sensor through the lens.

Meanwhile, during the movement of the AF coil **520,** the AF sensor **530** moves together with the AF coil **520** and detects the intensity of the magnetic field of the AF magnet **510** to detect the movement amount or position of the lens in an optical axis direction. The movement amount or position of the lens detected by the AF sensor **530** in an optical axis direction may be used for autofocus feedback control.

Hereinafter, the optical image stabilization (OIS) driving of a lens driving device according to the present embodiment will be described with reference to the drawings.

FIGS. 30 to 32 are diagrams for explaining the handshake correction driving of a lens driving device according to the present embodiment. FIG. 30 is a cross-sectional view illustrating the appearance of an OIS moving unit in an initial state in which no current is applied to an OIS-x coil and an OIS-y coil; FIG. 31 is a cross-sectional view illustrating the appearance in which an OIS moving unit moves in an x-axis direction perpendicular to the optical axis when current is applied to the OIS-x coil; and FIG. 32 is a cross-sectional view illustrating the appearance in which the OIS-y moving unit moves in a y-axis direction perpendicular to both the optical axis and the x-axis when current is applied to an OIS-y coil.

As illustrated in FIG. 30, the moving unit may be disposed at an initial position to which current is not applied to the OIS-x coil **620** and the OIS-y coil **720.** At this time, the moving unit may be an OIS moving unit.

When a current is applied to the OIS-x coil **620,** the OIS-x magnet **610** may move in an x-axis direction perpendicular to the optical axis by an electromagnetic interaction between the OIS-x coil **620** and the OIS-x magnet **610** (see **A** of FIG. 31). At this time, the OIS-x carrier **310** may move in an x-axis direction together with the OIS-x magnet **610.** Furthermore, the OIS-y carrier **410** and the lens may move in an x-axis direction together with the OIS-x carrier **310.** In more detail, when a forward current is applied to the OIS-x coil **620,** the OIS-x magnet **610,** the OIS-x carrier **310,** the OIS-y carrier **410,** and the lens may move in one direction on the x-axis. Furthermore, when a reverse current is applied to the OIS-x coil **620,** the OIS-x magnet **610,** the OIS-x carrier **310,** the OIS-y carrier **410,** and the lens may move in the other direction on an x-axis.

When a current is applied to the OIS-y coil **720,** the OIS-y magnet **710** may move in a y-axis direction perpendicular to the optical axis by an electromagnetic interaction between the OIS-y coil **720** and the OIS-y magnet **710** see **B** of FIG. 32. At this time, the OIS-y carrier **410** may move in a y-axis direction together with the OIS-y magnet **710.** Furthermore, the lens may move in a y-axis direction together with the OIS-y carrier **410.** More specifically, when a forward current is applied to the OIS-y coil **720,** the OIS-y magnet **710,** the OIS-y carrier **410,** and the lens may move in one direction on a y-axis. In addition, when a reverse current is applied to the OIS-y coil **720,** the OIS-y magnet **710,** the OIS-y carrier **410,** and the lens may move in the other direction on the y-axis.

Meanwhile, the OIS-x sensor **630** may detect the strength of the magnetic field of the OIS-x magnet **610** and detect the movement amount or position of the OIS-x magnet **610.** The movement amount or position detected by the OIS-x sensor **630** may be used for handshake correction feedback control in an x-axis direction. The OIS-y sensor **730** may detect the strength of the magnetic field of the OIS-y magnet **710** and detect the movement amount or position of the OIS-y magnet **710.** The movement amount or position detected by the OIS-y sensor **730** may be used for handshake correction feedback control in a y-axis direction.

Hereinafter, a camera device according to the present embodiment is described with reference to the drawings.

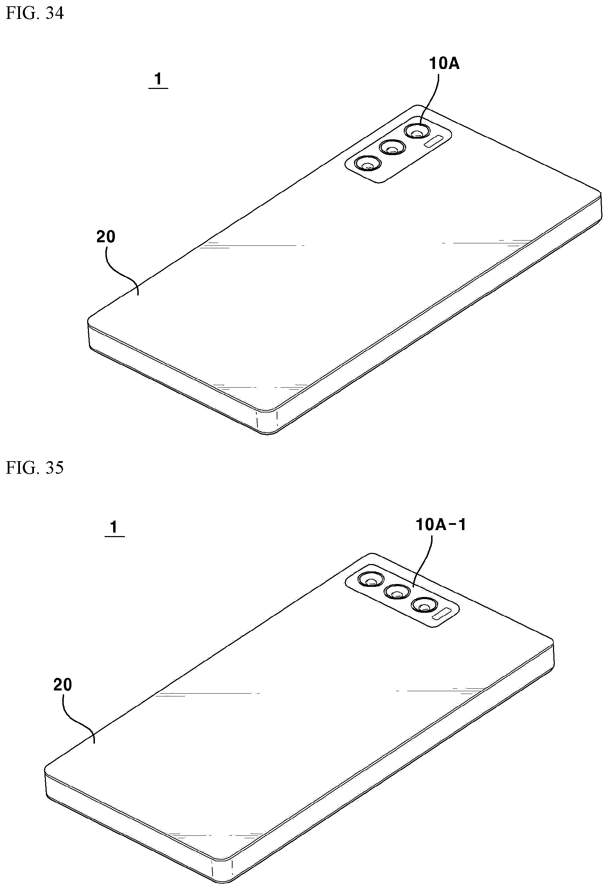

FIG. 35 is an exploded perspective view of a camera device according to the present embodiment.

The camera device **10A** may comprise a camera module.

The camera device **10A** may comprise a lens module **20.** The lens module **20** may comprise at least one lens. The lens may be disposed at a position corresponding to the image sensor **60.** The lens module **20** may comprise a lens and a barrel. The lens module **20** may be coupled to an OIS-y carrier **410** of the lens driving device **10.** The lens module **20** may be coupled to the OIS-y carrier **410** by screw-coupling and/or adhesive. The lens module **20** may be moved integrally with the OIS-y carrier **410.**

The camera device **10A** may comprise a filter **30.** The filter **30** may block light of a specific frequency band from passing through the lens module **20** from being incident on the image sensor **60.** The filter **30** may be disposed parallel to an x-y plane. The filter **30** may be disposed between the lens module **20** and the image sensor **60.** The filter **30** may be disposed in the sensor base **40.** In a modified embodiment, the filter **30** may be disposed in the base **110.** The filter **30** may comprise an infrared filter. The infrared filter may block light in an infrared region from being incident on the image sensor **60.**

The camera device **10A** may comprise a sensor base **40.** The sensor base **40** may be disposed between the lens driving device **10** and the printed circuit board **50.** The sensor base **40** may comprise a protruded portion **41** in which a filter **30** is disposed. An opening may be formed in a portion of the sensor base **40** in which the filter **30** is disposed so that light passing through the filter **30** may be incident on the image sensor **60.** An adhesive member may couple or attach the base **110** of the lens driving device **10** to the sensor base **40.** The adhesive member may additionally serve to prevent foreign substances from entering the interior of the lens driving device **10.** The adhesive member may comprise at least one among an epoxy, a thermosetting adhesive, and an ultraviolet-curable adhesive.

The camera device **10A** may comprise a printed circuit board (PCB) **50.** The printed circuit board **50** may be a substrate or a circuit board. A lens driving device **10** may be disposed in the printed circuit board **50.** A sensor base **40** may be disposed between the printed circuit board **50** and the lens driving device **10.** The printed circuit board **50** may be electrically connected to the lens driving device **10.** An image sensor **60** may be disposed in the printed circuit board **50.** Various circuits, elements, control units, and the like may be provided in the printed circuit board **50** to convert an image formed on the image sensor **60** into an electrical signal and transmit it to an external device.

The camera device **10A** may comprise an image sensor **60.** The image sensor **60** may be configured such that light passing through a lens and a filter **30** is incident to form an image. The image sensor **60** may be mounted on a printed circuit board **50.** The image sensor **60** may be electrically connected to the printed circuit board **50.** For example, the image sensor **60** may be coupled to the printed circuit board **50** by surface mounting technology (SMT). As another example, the image sensor **60** may be coupled to the printed circuit board **50** by flip chip technology. The image sensor **60** may be disposed such that its optical axis is aligned with that of the lens. That is, the optical axis of the image sensor **60** and the optical axis of the lens may be aligned. The image sensor **60** can convert light being irradiated to the effective image area of the image sensor **60** into an electrical signal. The image sensor **60** can be any one among a charge coupled device (CCD), a metal oxide semi-conductor (MOS), a CPD, and a CID.

The camera device **10A** may comprise a motion sensor **70.** The motion sensor **70** may be mounted on a printed circuit board **50.** The motion sensor **70** may be electrically connected to a control unit **80** through a circuit pattern provided in the printed circuit board **50.** The motion sensor **70** may output rotational velocity information due to the movement of the camera device **10A.** The motion sensor **70** may comprise a two-axis or three-axis gyro sensor or an angular velocity sensor.

The camera device **10A** may comprise a control unit **80.** The control unit **80** may be disposed in a printed circuit board **50.** The control unit **80** may be electrically connected to a coil **330** of a lens driving device **10.** The control unit **80** may individually control the direction, intensity, and amplitude of current supplied to the coil **330.** The control unit **80** may control the lens driving device **10** to perform an auto-focus function and/or a handshake correction function. Furthermore, the control unit **80** may perform auto-focus feedback control and/or handshake correction feedback control for the lens driving device **10.**

The camera device **10A** may comprise a connector **90.** The connector **90** may be electrically connected to a printed circuit board **50.** The connector **90** may comprise a port for being electrically connected to an external device.

Hereinafter, an optical device according to the present embodiment is described with reference to drawings.

FIG. 34 is a perspective view of an optical device according to the present embodiment; and FIG. 35 is a perspective view of an optical device according to a modified embodiment.

The optical device 1 may comprise any one or more among a mobile phone, a cellular phone, a portable terminal, a mobile terminal, a smart phone, a smart pad, a portable smart device, a digital camera, a laptop computer, a digital broadcasting terminal, a personal digital assistant (PDA), a portable multimedia player (PMP), and a navigation device. The optical device **1** may comprise any device for photographing images or pictures.

The optical device **1** may comprise a main body **20.** The optical device **1** may comprise a camera device **10A.** The camera device **10A** may be disposed in the main body **20.** The camera device **10A** may photograph a subject. The optical device **1** may comprise a display. The display may be disposed in the main body **20.** The display may output one or more of an image and a video photographed by the camera device **10A.** The display may be disposed on a first surface of the main body **20.** The camera device **10A** may be disposed on one or more of the first surface of the main body **20** and the second surface opposite to the first surface. As illustrated in FIG. 34, the camera device **10A** may have a triple camera disposed in a vertical direction. As illustrated in FIG. 35, the camera device **10A-1** may have a triple camera disposed in a horizontal direction.

Although the present embodiment of the present invention has been described with reference to the attached drawings, those skilled in the art will understand that the present invention can be implemented in other specific forms without changing the technical idea or essential characteristics thereof. Therefore, it should be understood that the embodiments described above are exemplary in all respects and not restrictive.

## Claims

1. A lens driving device comprising:
a fixed unit;
a first moving unit disposed on the fixed unit;
a second moving unit disposed in the first moving unit and comprising a bobbin and a guide frame;
a first drive unit configured to move the first moving unit in an optical axis direction;
a second drive unit disposed on the first moving unit and the second moving unit and configured to move the second moving unit in an x-axis; and
a third drive unit configured to move the bobbin in a y-axis.

2. The lens driving device of claim 1, wherein the first moving unit brings the bobbin in close contact with the guide frame.

3. The lens driving device of claim 1, wherein the first moving unit comprises a yoke configured to bring the bobbin in close contact with the guide frame.

4. The lens driving device of claim 1, wherein the first moving unit comprises a first yoke configured to bring the first moving unit in close contact with the fixed unit and a second yoke configured to bring the guide frame in close contact with the first moving unit.

5. The lens driving device of claim 4, wherein the first moving unit comprises a third yoke configured to bring the bobbin in close contact with the guide frame.

6. The lens driving device of claim 5, wherein the first moving unit comprises a housing, and the first to third yokes are coupled with the housing.

7. The lens driving device of claim 1, wherein the third drive unit comprises a first magnet disposed on the bobbin and a first coil configured to interact with the first magnet, and
wherein the first coil is configured to move together with the first moving unit.

8. The lens driving device of claim 7, wherein the second drive unit comprises a second magnet disposed on the guide frame and a second coil configured to interact with the second magnet, and
wherein the second coil is configured to move together with the first moving unit.

9. The lens driving device of claim 8, wherein the first drive unit comprises a third magnet disposed on the fixed unit and a third coil configured to interact with the third magnet, and
wherein the third coil is configured to move together with the first moving unit.

10. A lens driving device comprising:
a base;
a housing disposed on the base;
a guide frame disposed in the housing;
a bobbin disposed in the guide frame;
a first ball disposed between the base and the housing;
a second ball disposed between one side surface of the guide frame and a side surface of the housing; and
a third ball disposed between a side surface of the bobbin and the other side surface of the guide frame.
